# EUROPÄISCHE PATENTSCHRIFT

(11) **EP 2 320 157 B1**
(45) Veröffentlichungstag und Bekanntmachung des Hinweises auf die Patenterteilung: **02.07.2014**
(21) Anmeldenummer: 10014047.4
(22) Anmeldetag: 28.10.2010
(51) Int. Cl.: F24J 2/52, H01L 31/042, H01L 31/048

(54) **Halterung und modulares Stapelsystem zum sicheren Lagern und/oder Transportieren von rahmenlosen PV-Modulen oder anderen flachen, quaderförmigen Körpern**
Holder and modular stacking system for secure storage and/or transportation of frameless PV modules or other flat, cuboid bodies
Fixation et système d'empilement modulaire pour la fixation et/ou le transport sécurisé de modules PV sans cadre ou d'autres corps plats parallélépipédiques

(30) Priorität: 06.11.2009 DE 202009015110 U
(43) Veröffentlichungstag der Anmeldung: 11.05.2011
(73) Patentinhaber: Häberlein-Lehr, Ulla, 64319 Pfungstadt (DE)
(72) Erfinder: Häberlein, Joachim, 64319 Pfungstadt (DE)
(74) Vertreter: Blumbach Zinngrebe

(56) Entgegenhaltungen:
- EP-B1- 1 617 485
- WO-A2-2008/087370
- JP-A- 2009 246 017
- US-A- 4 000 843
- US-A- 6 070 727

## Beschreibung

Die vorliegende Erfindung betrifft eine Halterung zum sicheren Lagern bzw. zum sicheren Transportieren von rahmenlosen photovoltaischen Modulen bzw. Photovoltaik-Modulen (PV-Modulen) oder anderen flachen, quaderförmigen Körpern sowie ein modulares Stapelsystem umfassend mehrere derartige Halterungen, wobei das modulare Stapelsystem insbesondere zum Nebeneinanderstapeln vertikal ausgerichteter rahmenloser PV-Module oder anderer flacher, quaderförmiger Körper geeignet ist. Bei den anderen flachen, quaderförmigen Körpern kann es sich beispielsweise um Glasscheiben, Türblätter, Tischplatten, Steinplatten und Ähnliches handeln, für deren sicheres Lagern und Transportieren die erfindungsgemäße Halterung und das erfindungsgemäße modulare Stapelsystem ebenfalls einsetzbar ist.

Dank eines gewandelten Energiebewusstseins der Bevölkerung und unterstützt durch staatliche Förderinitiativen hat die Nutzung erneuerbarer Energiequellen immer mehr wirtschaftliche Bedeutung gewonnen - dies gilt vor allem auch für den Bereich der Photovoltaik, der Umwandlung von Sonnenlicht in elektrischen Strom. Vielerorts - nicht nur in Deutschland - sind leistungsfähige, hochmodern ausgestatte Fabriken entstanden, in denen heute Photovoltaik-Module (PV-Module) nach rationellsten Verfahren als Massenartikel hergestellt werden, um in alle Teile Europas und der Welt versandt zu werden.

PV-Module bestehen in der Standard-Ausführung aus einer vorderseitigen Einscheiben-Sicherheitsglasscheibe, zwei verschmolzenen Lagen transparenter Laminierfolie, zwischen denen die Photovoltaik-Zellen, meist aus Silicium, und ein elektrisches Leitersystem eingebettet sind, sowie einer die Rückseite dampfdiffusionsdicht verschließenden speziellen Kunststoff-Folie. Man spricht in diesem Fall von Glas/Kunststoff-Modulen. Bei den sogenannten Glas/Glas-Modulen ist die Rückseite stattdessen mit einer Glasscheibe versehen.

PV-Module können einerseits mit einem Rahmen aus Metallprofil, beispielsweise gezogenem Aluminiumprofil, ausgestattet sein, der zum Beispiel eine Rahmentiefe von 42 mm hat. Andererseits werden aber auch rahmenlose PV-Module - sowohl in der Ausführung als Glas/Kunststoff-Module wie auch als Glas/Glas-Module - hergestellt und versandt.

Die Größe von PV-Standardmodulen liegt meist im Bereich zwischen 0,8 m² und 1,6 m². Das Gewicht liegt bei gerahmten Modulen meist im Bereich zwischen 14 und 28 kg und bei ungerahmten Modulen je nach Größe zwischen 5 und 20 kg, wobei Glas/Glas-Module um etwa 60 % schwerer sein können als Glas/Kunststoff-Module.

In der Vergangenheit wurde bereits erkannt, dass sich die Überlegungen zur innovativen Rationalisierung nicht nur auf fertigungstechnische Kriterien beschränken dürfen, sondern auch den Bereich Lagerung, Verpackung, Versand und Transportsicherung einbeziehen müssen.

Für den Transport zum Kunden wurden die PV-Module üblicherweise einzeln in Kartonage verpackt und auf Holzpaletten horizontal übereinander gestapelt. Um einen Stapel aus Einzelpackungen gegen ein Verrutschen zu sichern, wurde er durch Spannbänder mit der Palette verbunden.

Diese allgemein übliche Methode der Transportverpackung von PV-Modulen war jedoch mit gravierenden Nachteilen verbunden. Hierzu zählten ein enormer Bedarf an erforderlichem Verpackungsmaterial, insbesondere Kartonage, sowie ein nicht unerheblicher Arbeitsaufwand sowohl für das Einpacken als auch für das Auspacken der einzeln kartonierten PV-Module beim Endabnehmer. Hinzu kam die undankbare Aufgabe, beträchtliche Mengen Kartonage am Montageort zu sammeln, erforderlichenfalls zu zerkleinern und dem Papierrecycling zuzuführen. Darüber hinaus konnten mit dieser Methode die PV-Module nur bis zu einer begrenzten Stapelhöhe gestapelt werden, da sich die addierende Gewichtslast der gestapelten Module auf die zuunterst liegenden Module überträgt. Zu dieser statischen Belastung kommt noch die dynamische Belastung beim Transport hinzu, zum Beispiel durch hartes Absetzen mit dem Gabelstapler, Beschleunigungs-, Verzögerungs- und Zentrifugalkräfte beim LKW-Transport und vor allem Erschütterungen beim Fahren über Schwellen und Schlaglöcher. All dies kann bei zu hoher Stapelung leicht zur Beschädigung des oder der zuunterst liegenden Moduls bzw. Module führen.

Verpackte PV-Module konnten deshalb selten in Stapelhöhen von mehr als 1 m transportiert werden, wobei wegen der Gefahr der Überbelastung unten liegender Module auch die Übereinanderstapelung von 2 beladenen Paletten unmöglich war, so dass die Ladehöhe eines LKW-Laderaums häufig nur teilweise genutzt werden konnte.

Ein wesentlicher weiterer Nachteil des Verpackens von PV-Modulen mit Kartonage besteht darin, dass Kartonage sehr empfindlich gegenüber Feuchtigkeit ist und beispielsweise nicht einem Regen ausgesetzt werden darf, da sie im nassen Zustand keinerlei Stabilität bzw. Schutz mehr bieten kann.

Aufgrund dieser Nachteile wurden andere Lösungen zum Stapeln, Lagern und Transportieren von PV-Modulen entwickelt.

Zum Beispiel ist aus Patent Abstracts of Japan Bd. 2000, Nr. 06, 22. September 2000 und JP 2000 079961 A, 21. März 2000 ein modulares Stecksystem zum sicheren Lagern und Transportieren von horizontal gestapelten Photovoltaik-Modulen (PV-Modulen) bekannt. Das System ist als Rahmenkonstruktion gestaltet, die durch vier vertikal verlaufende Säulen und diese verbindende horizontale Streben gebildet ist. Mehrere Rahmeneinheiten der Rahmenkonstruktion sind übereinander stapelbar und mittels einer Steckverbindung verbunden. Jede Rahmeneinheit weist vier Säulenabschnitte und diese verbindende horizontale Streben auf. Zum Zusammenstecken übereinander angeordneter Säulenabschnitte weist der jeweilige Säulenabschnitt oben einen Zapfen und unten eine Ausnehmung auf. Die Photovoltaik-Module sind in zwei der vier horizontalen Streben, und zwar in zwei parallel zueinander angeordneten Streben der jeweiligen Rahmeneinheit gelagert. Hierzu nehmen die beiden Streben Verschiebeteile auf, auf denen das Modul ruht. Der jeweilige Säulenabschnitt der Säule ist als glatter Stab mit den geformten Enden gestaltet.

Ferner ist aus der Europäischen Patentschrift EP 1617485 B1 der Anmelderin ein modulares Stecksystem zum sicheren Lagern und Transportieren von horizontal gestapelten Photovoltaik-Modulen (PV-Modulen) bekannt. Dieses System ist ausschließlich aus einzelnen vertikal angeordneten, lastabtragenden Säulen gebildet, die jeweils aus Formteil-Gliedern bestehen, die übereinander angeordnet und ineinander gesteckt die jeweilige Säule bilden. Jedes dieser Formteil-Glieder ist auf der Seite, die zu dem zu tragenden Photovoltaik-Modul hin gerichtet ist, mit einem lastaufnehmenden Tragprofil als Auflagevorrichtung für das Photovoltaik-Modul ausgestattet und besitzt oberseitig bzw. unterseitig einen oder mehrere Zapfen oder eine Feder und unterseitig bzw. oberseitig einen oder mehrere offene Hohlräume zur passgenauen Aufnahme der/des Zapfen(s) oder eine Nut zur Aufnahme der Feder.

Für rahmenlose PV-Module ist jedoch das Übereinanderstapeln horizontal ausgerichteter Module wenn überhaupt nur bedingt geeignet. Vor allem für relativ großflächige rahmenlose PV-Modulen besteht aufgrund der einwirkenden starken statischen und dynamischen Belastungen eine hohe Bruchgefahr. Daher werden rahmenlose PV-Module zum Lagern und Transportieren bevorzugt bei vertikaler Ausrichtung der Module nebeneinandergestapelt, so wie es auch bei Flachgläsern üblich ist.

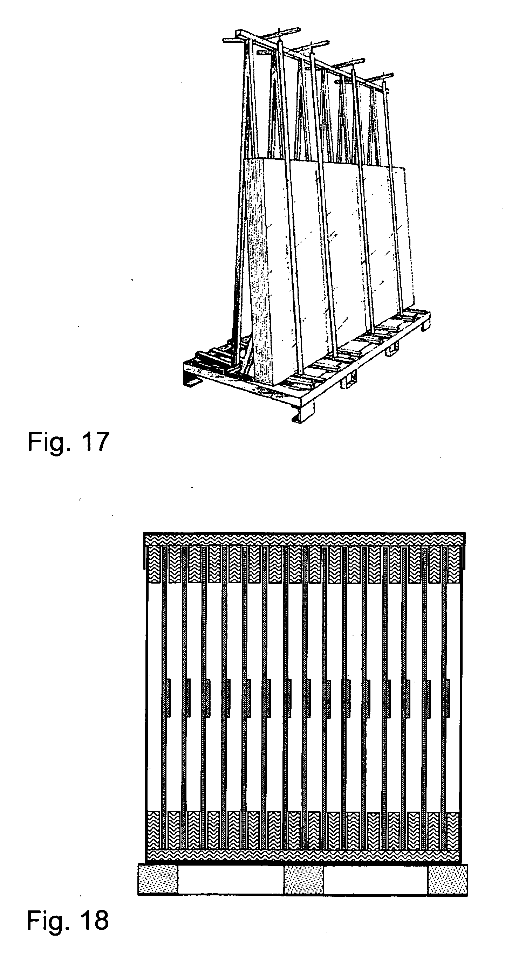

Für das Nebeneinanderstapeln von Flachgläsern werden sowohl stationäre als auch mobile Regalkonstruktionen benutzt, etwa ähnlich der, wie sie in Figur 17 abgebildet ist.

Grundsätzlich wären solche Regalkonstruktionen auch für das Lagern und Transportieren rahmenloser PV-Module nutzbar, aber diese Regalkonstruktionen könnten nur wenige aufnehmen. Zudem könnten mehrere PV-Module nicht nicht einfach aneinandergelehnt werden, da jeder PV-Modul in der Regel an seiner Rückseite eine vorspringende Anschlussdose besitzt. Zu berücksichtigen ist auch, dass ein leeres Regal trotzdem sehr sperrig und schwer ist und somit einen nicht unerheblichen Aufwand beim Transport erfordert.

Daher war bzw. ist es immer noch üblich, auch vertikal ausgerichtete rahmenlose PV-Module für die Lagerung und insbesondere für den Transport in Kartonage zu verpacken. Hierfür gibt es speziell angepasste Kartons, etwa ähnlich dem vereinfacht in Figur 18 gezeigten. Gemäß Figur 18 umfasst solch ein Karton einen unteres Teil zur Aufnahme mehrerer vertikal ausgerichteter, rahmenloser PV-Module sowie ein oberes Teil, welches als Deckel dient. Damit die vertikal ausgerichteten, rahmenlosen PV-Module in dem Karton nicht umfallen und gegeneinander schlagen, weisen wenigstens der Boden des unteren Teils sowie die Abdeckung des oberen Teils an der den PV-Modulen hingewandten Innenseite kammartige Einsätze, zum Beispiel aus Wellpappe, auf, wobei zwischen jeweils zwei zinkenartigen Vorsprüngen eines kammartigen Einsatzes ein PV-Modul positioniert ist. Die zinkenartigen Vorsprünge sind dabei breit genug, dass eine Berührung von zwei PV-Module auch unter Berücksichtigung ihrer rückseitig vorstehenden Anschlussdosen ausgeschlossen ist. Zur Einfacheren Handhabung befindet sich der gesamte Karton auf einer Transportpalette.

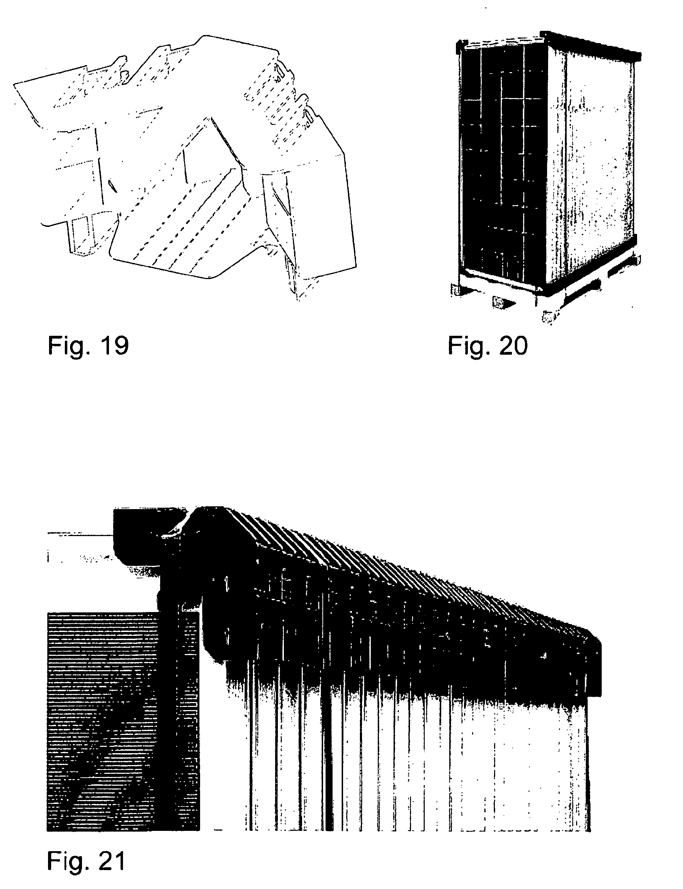

Die Firma Eckpack-Service GmbH & Co. KG (http://www.eckpack.de) schlägt vor, ein modulares Stecksystem, ähnlich dem der Europäischen Patentschrift EP 1617485 B1 der Anmelderin, nicht nur zum Übereinanderstapeln horizontal ausgerichteter PV-Module einzusetzen, sondern dass damit auch Stapel von vertikal ausgerichteten und nebeneinander angeordneten PV-Modulen erzeugbar sind, wie es die Figuren 19, 20 und 21 beispielhaft zeigen. Dazu werden die einzelnen PV-Module zunächst an ihren vier Ecken mit jeweils einem Formteil-Glied dieses modularen Stecksystems versehen und dann in horizontaler Ausrichtung übereinander gestapelt, bevor schließlich der gesamte Stapel gedreht wird, so dass die PV-Module in dem Stapel nunmehr vertikal ausgerichtet sind.

Von Nachteil ist jedoch, dass ein Formteil-Glied dieses modularen Stecksystems an gerahmte PV-Module angepasst und daher ausgebildet ist, mit seinem Federarm den Rahmen eines gerahmten PV-Moduls zu übergreifen und hinter dem Rahmen einzurasten (vgl. Fig. 19 und 21). An einem rahmenlosen PV-Modul würde ein derartiges Formteil-Glied jedoch keinen Halt finden, so dass dieses modulare Stecksystem nicht für das Nebeneinanderstapeln von vertikal ausgerichteten, rahmenlosen PV-Modulen verwendbar ist.

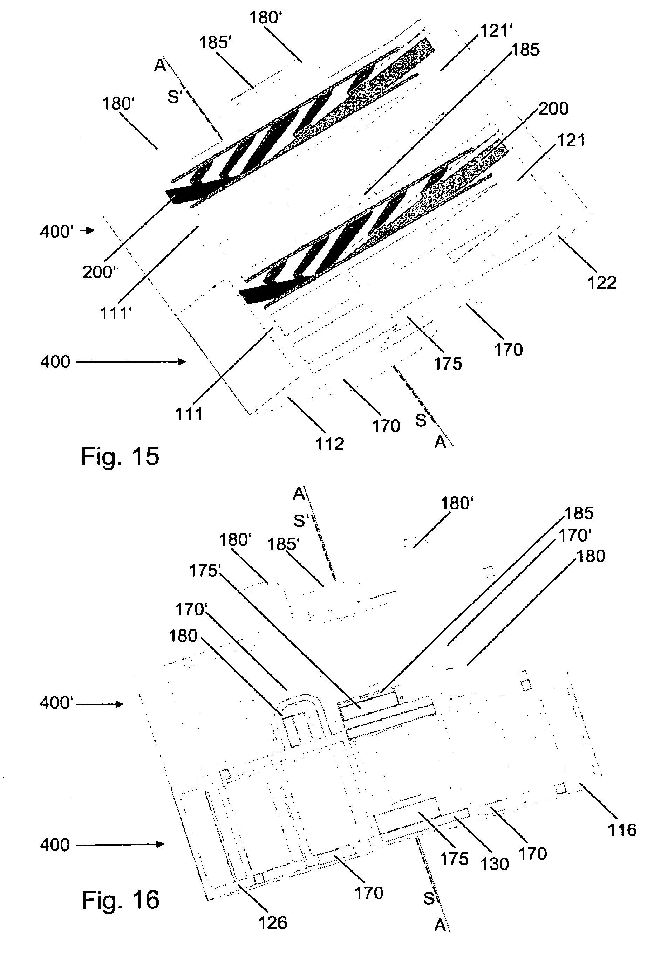

Nachteilig an der von Eckpack vorgeschlagenen Lösung ist zudem, dass ein mit diesem modularen Stecksystem gebildeter Stapel von vertikal ausgerichteten und nebeneinander angeordneten PV-Modulen relativ instabil ist, wenn er nicht durch zusätzlich umlaufende Spanngurte bzw. -bänder (vgl. Fig. 16) zusammengehalten und gegen ein Verrutschen bzw. Auseinanderfallen insbesondere längs der Stapelrichtung gesichert wird.

Ein weiterer Nachteil der von Eckpack vorgeschlagenen Lösung in Bezug auf rahmenlose PV-Module kann darin gesehen werden, dass die Ecken und Kanten jedes vertikal ausgerichteten PV-Moduls im Stapel, insbesondere die unteren Ecken- und Kantenbereiche, auf denen das jeweilige Modul aufliegt und auf denen somit das gesamte Gewicht des Moduls lastet, nur unzureichend gegen etwaige Beschädigungen geschützt wären. Dies könnten lediglich oberflächige Beschädigungen wie zum Beispiel Kratzer sein, die aufgrund der Vibrationen während des Transports entstehen, wenn die von Formteil-Gliedern umgebenen Ecken-und Kantenbereiche der rahmenlosen PV-Module gegen die Formteil-Glieder reiben. Es bestünde aber auch die Gefahr, dass es aufgrund von Stößen während des Transports zum Abplatzen oder Absplittern von Bruchteilen kommt.

Als eine zu lösende Aufgabe ergab sich daher aus den hier dargelegten Betrachtungen, ein System zum sicheren Lagern und Transportieren von rahmenlosen PV-Modulen unter Vermeidung wenigstens eines der geschilderten Nachteile zu schaffen.

Die erfindungsgemäße Lösung ist durch eine Halterung und ein modulares Stapelsystem mit den Merkmalen des jeweiligen unabhängigen Anspruchs gegeben.

Vorteilhafte und/oder bevorzugte Ausführungsformen und Weiterbildungen sind Gegenstand der jeweiligen abhängigen Ansprüche.

So ist zum Einen erfindungsgemäß eine Halterung zum sicheren Lagern und/oder Transportieren von rahmenlosen PV-Modulen vorgesehen, wobei diese Halterung aber ebenso für andere flache, quaderförmige Körper wie Glasscheiben, Türblätter, Tisch-, Möbel- oder Steinplatten geeignet ist, deren Ausmaß durch drei Seiten und deren Dicke durch die kürzeste der drei Seiten definiert ist. Eine derartige Halterung hat einen Grundkörper aus einem ersten Material, mit einer ersten Seitenwand, die längs einer Schnittgeraden mit einer zweiten Seitenwand in einem Verbindungswinkel von 90 Grad verbunden ist, so dass die Seitenwände L-förmig miteinander verbunden sind und eine keilartige Form des Grundkörpers definiert ist. Jede der Seitenwände hat eine Innenfläche, die sich jeweils längs zur Schnittgeraden zwischen einem ersten zur Schnittgeraden senkrechten Rand und einem zweiten zur Schnittgeraden senkrechten Rand erstreckt. Auch zwischen diesen Innenflächen der Seitenwände besteht ein rechter Winkel. Zudem hat jede der Seitenwände eine erste Stoßfläche, die an dem ersten Rand eine erste Kante mit der Innenfläche bildet, sowie eine zweite Stoßfläche, die an dem zweiten Rand eine zweite Kante mit der Innenfläche bildet. Der Grundkörper umfasst ferner wenigstens ein erstes Stützelement und davon längs der Schnittgeraden beabstandet wenigstens ein zweites Stützelement, wobei die Stützelemente an die Innenfläche wenigstens einer der Seitenwände angeformt sind und wobei durch das wenigstens eine erste Stützelement und das wenigstens eine zweite Stützelement und einen sich zwischen den ersten und zweiten Stützelementen über die Innenfläche wenigstens einer der Seitenwände erstreckenden ersten Innenflächenbereich ein Spalt gebildet ist. Weiterhin umfasst der Grundkörper wenigstens ein erstes und wenigstens ein zweites Sicherungselement, wobei das wenigstens eine erste Sicherungselement aufseiten der ersten Stoßflächen wirkt, und wobei das wenigstens eine zweite Sicherungselement entgegengesetzt passend zu dem wenigstens einem ersten Sicherungselement ausgebildet ist und aufseiten der zweiten Stoßflächen wirkt. Eine solche erfindungsgemäße Halterung ist aufseiten der ersten Stoßflächen sowie aufseiten der zweiten Stoßflächen jeweils mit einer weiteren entsprechend ausgerichteten, gleichartigen Halterung lösbar verbindbar, derart, dass die Schnittgeraden der Halterungen in einer gemeinsamen Achse liegen, wobei das wenigstens eine erste und das wenigstens eine zweite Sicherungselement erfindungsgemäß derart ausgebildet sind, dass sie im Zusammenwirken mit dem jeweils entgegengesetzt passenden Sicherungselement der weiteren Halterung die verbundenen Halterungen gegen ein Verrutschen quer zur gemeinsamen Achse und/oder gegen ein Verrutschen längs der gemeinsamen Achse sichern. Zudem umfasst die erfindungsgemäße Halterung eine Pufferstruktur aus einem zweiten, gegenüber dem ersten, weicheren Material mit einer anhaftenden Wirkung, wobei die Pufferstruktur auf den ersten Innenflächenbereich sowie jeweils auf die dem Spalt zugewandte Fläche des wenigstens einen ersten und des wenigstens einen zweiten Stützelements aufgebracht ist. Dabei ist der Spalt zur Aufnahme und Stützung eines Eckbereichsabschnitts eines zu lagernden und/oder zu transportierenden PV-Moduls oder eines anderen flachen, quaderförmigen Körpers ausgebildet, das bzw. der mit der seine Dicke definierenden Seite parallel zur Schnittgeraden ausgerichtet ist, und die Pufferstruktur ist ausgebildet, den Eckbereichsabschnitt des PV-Moduls bzw. des flachen, quaderförmigen Körpers in dem Spalt zu polstern und zu fixieren, sofern die Dicke des PV-Moduls bzw. des flachen, quaderförmigen Körpers im Wesentlichen der Weite des Spalts entspricht

Zum Anderen ist erfindungsgemäß ein modulares Stapelsystem zum sicheren Lagern und/oder Transportieren von rahmenlosen PV-Modulen oder anderen flachen, quaderförmigen Körpern vorgesehen. Ein derartiges Stapelsystem umfasst wenigstens eine erste, wenigstens eine zweite, wenigstens eine dritte und wenigstens eine vierte erfindungsgemäße Halterung, wobei die zweite gegenüber der ersten Halterung, die dritte gegenüber der zweiten Halterung und die vierte gegenüber der dritten Halterung jeweils um 90 Grad um die Achse ihrer Schnittgeraden gedreht anordenbar ist, zur Aufnahme jeweils eines Abschnitts eines der vier Eckbereiche eines PV-Moduls oder eines anderen flachen quaderförmigen Körpers in den Spalt jeder der Halterungen. Zudem sind die wenigstens eine erste, die wenigstens eine zweite, die wenigstes eine dritte und die wenigstens eine vierte Halterung mit entsprechend ausgerichteten weiteren gleichartigen ersten, zweiten, dritten und vierten Halterungen lösbar verbindbar, und zwar derart, dass die Schnittgeraden aller ersten, zweiten, dritten und vierten Halterungen jeweils in einer gemeinsamen Achse liegen, und dass die jeweils verbundenen Halterungen durch das Zusammenwirken ihrer Sicherungselemente gegen ein Verrutschen quer zur gemeinsamen Achse und/oder gegen ein Verrutschen längs der gemeinsamen Achse der Schnittgeraden gesichert sind.

Das erste Material, das heißt das Material des Grundkörpers, ist bevorzugt ein harter Kunststoff oder ein Metall, insbesondere Alu-Druckguss. Das zweite Material, also das der Pufferstruktur, ist vorteilhafter Weise ein weicher Kunststoff.

Dank der Pufferstruktur in dem Spalt jeder erfindungsgemäßen Halterung sind die Ecken- und Kantenbereiche der PV-Module bzw. der anderen flachen, quaderförmigen Körper bei vertikaler Ausrichtung innerhalb eines mit dem modularen Stapelsystem gebildeten Stapels vor Beschädigungen deutlich besser geschützt, und zwar nicht nur vor oberflächigen Beschädigungen wie Kratzern sondern auch vor dem Abplatzen oder Absplittern von Bruchteilen. Denn einerseits fixiert die Pufferstruktur das PV-Modul in dem Spalt, das heißt sie vermeidet ein Spiel zwischen dem PV-Modul und der Halterung und ein Reiben des PV-Moduls an der Halterung. Andererseits polstert die Pufferstruktur das PV-Modul in dem Spalt, das heißt sie federt Stöße ab, die zum Beispiel durch hartes Absetzen mit dem Gabelstapler oder beim LKW-Transport durch Erschütterungen beim Fahren über Schwellen und Schlaglöcher verursacht sein können und verringert somit die auf das PV-Modul einwirkende dynamische Belastung.

Die Pufferstruktur kann je nach Ausführungsform insgesamt eine gleichmäßige oder in Abhängigkeit vom Aufbringungsort eine unterschiedliche Dicke aufweisen. Beispielsweise kann die Pufferstruktur dort, wo sie auf dem ersten Innenflächenbereich aufgebracht ist, eine andere Dicke besitzen, als dort, wo sie auf die Flächen der Stützelemente aufgebracht ist. Die Pufferstruktur kann aber beispielsweise auch insgesamt oder teilweise eine gewellte Oberfläche haben. Eine weitere Möglichkeit ist, das die Dicke der Pufferstruktur in eine Richtung ab- bzw. zunimmt.

Gemäß einer besonders bevorzugten Ausführungsform ist die Pufferstruktur an der Eingangsöffnung des Spalts zunächst dünner und nimmt dann in Richtung des ersten Innenflächenbereichs an Dicke zu. Da die Weite des Spalts erst allmählich enger wird, ergibt sich daraus ein vorteilhafter Trichtereffekt, der das Einsetzen eines Eckbereichsabschnitts zum Beispiel eines PV-Moduls in den Spalt einer Halterung bzw. das Aufstecken einer Halterung mit dem Spalt auf einen Eckbereich eines PV-Moduls wesentlich erleichtert.

Neben dem Polstern und Fixieren eines Eckbereichsabschnitts eines rahmenlosen PV-Moduls oder eines anderen flachen quaderförmigen Körpers in dem Spalt einer erfindungsgemäßen Halterung dient die Pufferstruktur mit der anhaftenden Wirkung ihres Materials ferner dazu, dass die Halterung auch ohne irgend einen Einrastmechanismus an der relativ glatten Oberfläche eines rahmenlosen PV-Moduls bzw. einer Glasscheibe, Steinplatte und dergleichen einen guten, zumindest aber rüttelfesten Halt findet, und nur mit einer entsprechend größeren Zugkraft wieder von dem Eckbereichsabschnitt des PV-Moduls bzw. des flachen, quaderförmigen Körpers lösbar ist. Somit bietet die erfindungsgemäße Halterung einen weiteren wesentlichen Vorteil gegenüber dem Stand der Technik.

Hinsichtlich der Aufbringungsart der Pufferstruktur sind bevorzugt Ausführungsformen vorgesehen, bei denen die Pufferstruktur auf die jeweils dem Spalt zugewandte Fläche des wenigstens einen ersten Stützelements und des wenigstens einen zweiten Stützelements sowie den ersten Innenflächenbereich aufgespritzt ist. Grundsätzlich sind aber auch Ausführungsformen möglich, bei denen die Pufferstruktur zunächst ein separater Körper ist, der dann auf den ersten Innenflächenbereich sowie jeweils auf die dem Spalt zugewandte Fläche des wenigstens einen ersten Stützelements und des wenigstens einen zweiten Stützelements derart aufbringbar ist, dass er in den von dieses Flächen umgebenen Spalt einlegbar, einklebbar, einrastbar oder einclipsbar ist.

Die Sicherungselemente sind bevorzugt dergestalt, dass das wenigstens eine erste Sicherungselement bzw. das wenigstens eine zweite Sicherungselement als Zapfen oder als Feder ausgebildet ist, und dass das wenigstens eine zweite Sicherungselement bzw. das wenigstens eine erste Sicherungselement als offener Hohlraum zur passgenauen Aufnahme des Zapfens einer entsprechend ausgerichteten weiteren gleichartigen Halterung oder als Nut zur passgenauen Aufnahme der Feder einer entsprechend ausgerichteten weiteren gleichartigen Halterung ausgebildet ist.

Bevorzugt ist der Zapfen oder die Feder an wenigstens einer ersten Stoßfläche bzw. an wenigstens einer zweiten Stoßfläche ausgebildet und der entgegengesetzt passend ausgebildete offene Hohlraum oder die entgegengesetzt passend ausgebildete Nut befindet sich an wenigstens einer zweiten Stoßfläche bzw. an wenigstens einer ersten Stoßfläche. Bei miteinander verbundenen Halterungen dieser Ausführungsform steckt dann ein Zapfen bzw. eine Feder der einen Halterung passgenau in einem offenen Hohlraum bzw. einer Nut der anderen Halterung. Die durch diese Steckverbindung miteinander verbundenen Halterungen sind durch ihre Sicherungselemente gegen ein Verrutschen quer zur gemeinsamen Achse der Schnittgeraden gesichert.

Gemäß einer anderen, besonders bevorzugten Ausführungsform ist die Feder längs wenigstens einer der ersten Kanten bzw. längs wenigstens einer der zweiten Kanten an wenigstens einer der Innenflächen angeformt und die entgegengesetzt passende Nut ist durch eine Auskragung gebildet, die längs wenigstens einer der zweiten Kanten bzw. längs wenigstens einer der ersten Kanten an wenigstens einer der der Innenflächen angeformt ist. Bei miteinander verbundenen Halterungen dieser vorteilhaften Ausführungsform hintergreift dann die Auskragung der einen Halterung die Feder der anderen Halterung derart, dass die Feder formschlüssig in der durch die Auskragung gebildeten Nut sitzt. Derart miteinander verbundene Halterungen sind durch ihre Sicherungselemente gegen eine Verrutschen längs der gemeinsamen Achse ihrer Schnittgeraden gesichert. Um die Halterungen wieder voneinander lösen zu können, ist zumindest eine nicht längs der gemeinsamen Achse der Schnittgeraden auszuführende Bewegung der Halterungen zueinander erforderlich. Bereits die anhaftende Wirkung der Pufferstruktur in dem Spalt jeder Halterung trägt zudem dazu bei, dass ein Verrutschen der zum Beispiel innerhalb eines Stapels miteinander verbundener Halterungen quer zur gemeinsamen Achse der Schnittgeraden zumindest erschwert ist, wenn sich in ihrem Spalt jeweils ein Eckbereichsabschnitt etwa von nebeneinander gestapelten PV-Modulen befindet.

Ein mit Hilfe des erfindungsgemäßen modularen Stapelsystems unter Verwendung von Halterungen mit derartigen Sicherungselementen gebildeter Stapel von rahmenlosen, in vertikaler Ausrichtung nebeneinander angeordneten PV-Modulen, ist derart stabil und vor einem Auseinanderfallen bzw. einem Verrutschen wenigstens längs der Stapelrichtung gesichert, dass er zumindest während der Lagerung nicht von zusätzlich umlaufenden Spanngurten bzw. -bändern zusammengehalten werden muss.

Um miteinander verbundene Halterungen zusätzlich zur zuvor beschriebenen Wirkung der Pufferstruktur auch gegen ein Verrutschen quer zur gemeinsamen Achse der Schnittgeraden zu sichern, sind bei einer besonders bevorzugten Ausführungsform der Halterung das erste oder ein weiteres erstes Sicherungselement sowie das zweite oder ein weiteres zweites Sicherungselement entsprechend geeignet ausgebildet. So ist das erste oder ein weiteres erstes Sicherungselement beispielsweise als ein Durchlass ausgebildet, der sich quer zur Schnittgeraden der zwei verbundenen Seitenwände entlang der Winkelhalbierenden des Verbindungswinkels durch die Seitenwände hindurch erstreckt und in seinem Inneren eine Kante besitzt, an der sich sein Innenmaß erweitert. Das zweite oder ein weiteres zweites Sicherungselement ist dann zum Beispiel eine Rastnase, die, wenn Halterungen miteinander verbunden sind, in den Durchlass der weiteren Halterung eingreift und hinter der Kante in seinem Inneren einrastet. Um derart miteinander verbundene Halterungen wieder voneinander lösen zu können, ist mit einem Finger oder geeigneten Werkzeug von außen in den Durchlass einzugreifen und die Rastnase zurückzubiegen.

Es sei hinsichtlich der Sicherungselemente erwähnt, dass solange die ersten und zweiten Sicherungselemente entgegengesetzt passend ausgebildet sind, es im Wesentlichen frei festlegbar ist, ob zum Beispiel ein als Zapfen oder Feder ausgebildetes Sicherungselement aufseiten der ersten Stoßflächen und entsprechend ein als offener Hohlraum oder Nut ausgebildetes Sicherungselement aufseiten der zweiten Stoßflächen wirkt oder umgekehrt.

Gemäß einer weiteren Ausführungsform umfasst der Grundkörper der Halterung weitere erste und/oder zweite Stützelemente. Sofern es mehrere erste Stützelemente gibt, sind diese derart an die eine oder die andere Innenfläche der Seitenwände angeformt, dass sie in einer sich quer zur Schnittgeraden zwischen den Innenflächen der Seitenwände erstreckenden gemeinsamen ersten Ebene liegen. Entsprechend sind die einzelnen zweiten Stützelemente, sofern es mehrere gibt, derart an die eine oder die andere Innenfläche der Seitenwände angeformt, dass sie in einer sich quer zur Schnittgeraden zwischen den Innenflächen der Seitenwände erstreckenden gemeinsamen zweiten Ebene liegen, die von der ersten Ebene bzw. dem ersten Stützelement längs der Schnittgeraden beabstandet ist. Somit sind alle ersten und zweiten Stützelemente gemeinsam an der Bildung des Spalts zur Aufnahme eines Eckbereichsabschnitts eines PV-Moduls beteiligt.

Bevorzugt ist wenigstens eines der Stützelemente an die Innenflächen beider Seitenwände angeformt, um die Seitenwände des Grundkörpers der Halterung gegeneinander zu stützen und somit die Stabilität der Halterung selbst zu erhöhen.

Zweckmäßiger Weise sind die ersten Ränder von den zweiten Rändern der Innenflächen der Seitenwände derart längs der Schnittgeraden beabstandet, dass die Innenflächen breiter sind, als der Spalt zur Aufnahme eines Eckbereichsabschnitts eines PV-Moduls weit ist, so dass die die Innenflächen einen zweiten Innflächenbereich außerhalb des Spalts aufweisen. Eine derartig ausgebildete Halterung ist auch für ein PV-Modul oder einen anderen flachen, quaderförmigen Körper geeignet, das bzw. der mit einem Eckbereichsabschnitt zwar in den Spalt passt, das bzw. der jedoch an einem anderen Bereich als einem seiner Eckbereiche einen Vorsprung besitzt, der sich im Wesentlichen parallel zur Schnittgeraden, jedoch nicht über den zweiten Innenflächenbereich hinaus erstreckt. Bei einem PV-Modul kann ein solcher Vorsprung zum Beispiel eine Anschlussdose sein, die sich auf der Rückseite des PV-Moduls befindet.

Darüber hinaus liegt es selbstverständlich im Rahmen der Erfindung, dass, wenn die Innenflächen breiter sind als der Spalt zur Aufnahme eines Eckbereichsabschnitts eines PV-Moduls weit ist, die Innenflächen einen zweiten Innflächenbereich auf der einen Seite außerhalb des Spalts sowie einen zusätzlichen dritten Innenflächenbereich auf der anderen Seite außerhalb des Spalts aufweisen, so dass eine derartig ausgeführte Halterung auch für flache quaderförmige Körper verwendbar ist, die auf ihrer Vorder-und Rückseite eine Anzahl von sich im Wesentlichen parallel zur Schnittgeraden erstreckenden Vorsprüngen aufweisen.

In jedem Fall hängt die Eignung einer Halterung für ein PV-Modul oder einen anderen flachen, quaderförmigen Körper bestimmter Dicke einerseits von der Spaltweite der Halterung ab, und andererseits davon, ob die Innenflächen der Seitenwände und damit die Seitenwände selbst breit genug sind, damit gegebenenfalls noch vorhandene Vorsprünge an der Vorder- und/oder Rückseite des PV-Moduls bzw. des flachen, quaderförmigen Körpers nicht darüber hinausragen.

Ein vorteilhafter Aspekt der Pufferstruktur ist es, insbesondere wenn sie einen separaten Körper bildet, dass die an sich feste Weite des Spalts einer Halterung durch die Dicke der aufgebrachten Pufferstruktur zumindest um einige Millimeter variierbar wird. Auf diese Weise kann zum Beispiel bei der Herstellung der Halterungen durch das Aufspritzen unterschiedlich dicker Pufferstrukturen auf die den Spalt begrenzenden Flächen des gleichen Typs von Grundkörper auf einfache Weise eine Varianz in der Spaltweite erreicht werden. Mit einer Pufferstruktur als separaten Körper lässt sich die Spaltweite des Grundkörpers einer Halterung besonders praktisch auch noch nach Abschluss der Herstellung und bevorzugt auch vor jeder weiteren Verwendung anpassen, indem einfach eine Pufferstruktur der jeweils erforderlichen Dicke in den Spalt des Grundkörpers einer Halterung eingelegt, eingeclipst oder eingerastet wird.

Ergänzend kann bei einer Halterung, deren Innenflächen breiter sind, als der Spalt zur Aufnahme eines Eckbereichsabschnitts eines PV-Moduls weit ist und somit einen zweiten bzw. dritten Innflächenbereich außerhalb des Spalts aufweisen, wenigstens ein drittes Stützelement vorhanden sein, wobei dieses längs der Schnittgeraden von dem wenigstens einen ersten und dem wenigstens einen zweiten Stützelement beabstandet im Gebiet des zweiten bzw. dritten Innenflächenbereichs an die Innenflächen beider Seitenwände angeformt ist, um die Seitenwände des Grundkörpers der Halterung gegeneinander zu stützen und somit die Halterung in sich weiter zu stabilisieren.

Bevorzugt bildet ein Stützelement, das an die Innenflächen beider Seitenwände angeformt ist, eine durchweg geschlossene oder teils offene dreieckige Wand aus, die sich zwischen den Innenflächen der Seitenwände erstreckt.

Gemäß einer besonders bevorzugten Ausführungsform hat wenigstens eine der Seitenwände des Grundkörpers der Halterung wenigstens einen, insbesondere runden, Durchbruch zwischen der ersten Stoßfläche und der zweiten Stoßfläche. Eine Halterung gemäß dieser Ausführungsform kann neben dem Lagern und Transportieren von PV-Modulen auch zur Montage von PV-Modulen am Installationsort genutzt werden, da sie zum Beispiel ein direktes Festschrauben der Halterung an einer Unterlage erlaubt. Somit ist also ein PV-Modul, das an seinen Ecken mit je einer derartigen Halterung versehen ist, auf einfache Weise etwa an einer Fassade oder auf einem Dach montierbar, wobei vorteilhafter Weise zur Montage dieselben Halterungen verwendbar sind, in denen das PV-Modul bereits während des Transports im Stapel gehalten wurde.

Ergänzend oder alternativ zu dem wenigstens einen Durchbruch weist bevorzugt wenigstens eine der Seitenwände des Grundkörpers der Halterung an wenigstens einer ihrer Stoßflächen, insbesondere an ihrer zweiten Stoßfläche, eine rechteckige oder trapezförmige Vertiefung auf. Eine Halterung gemäß dieser Ausführungsform kann ebenfalls neben dem Lagern und Transportieren von PV-Modulen auch zur Montage von PV-Modulen am Installationsort genutzt werden, wobei die Halterung ein indirektes Festschrauben bzw. ein Festklemmen an einer Unterlage mittels einer Klemmvorrichtung, wie einem Z-Winkel bzw. Z-Profil oder einem Hutprofil, erlaubt. Zur Montage der Halterung wird beispielsweise ein Z-Profil mit dessen unteren Flansch bzw. unterer Abkantung an einem Trägerprofil festgeschraubt, wobei der obere Flansch bzw. die obere Abkantung die Stoßfläche an der Vertiefung übergreift und die Halterung an das Trägerprofil presst. Da die Kontur der Vertiefung im Wesentlichen der Kontur des Flansches entspricht, erleichtert die Vertiefung einerseits das richtige Positionieren von Klemmvorrichtung und Halterung bei der Montage und erschwert andererseits ein Verrutschen der Halterung nach der Montage.

Sofern die Halterung vorteilhafter Weise an wenigstens einer der Seitenwände des Grundkörpers sowohl einen Durchbruch zwischen den Stoßflächen als auch eine Vertiefung an einer Stoßfläche hat, erlaubt sie folglich eine Montage wahlweise durch Festschrauben oder Festklemmen.

Befindet sich der Durchbruch besonders vorteilhaft im Gebiet der Vertiefung an einer Stoßfläche, so ist zudem ein besonders verrutschungssicheres Festklemmen der Halterung an einer Unterlage möglich. Hierzu bedarf es einfach einer Klemmvorrichtung, deren oberer Flansch, welcher die Stoßfläche der Halterung an der Vertiefung übergreift, an seiner Unterseite eine Nase hat, die passgenau in den Durchbruch eingreift.

Weitere Merkmale und/oder Vorteile der Erfindung sind in der nachfolgenden Beschreibung, die sich insbesondere auf die die Figuren bezieht, sowie in den Figuren selbst dargestellt, wobei angemerkt wird, dass alle Einzelmerkmale und alle Kombinationen von Einzelmerkmalen weitere erfinderische Ausgestaltungen darstellen.

In den Figuren 1 bis 16 ist die Erfindung in mehreren Ausführungsbeispielen dargestellt, ohne jedoch hierauf beschränkt zu sein. Die Figuren 17 bis 21 zeigen Lösungen gemäß Stand der Technik. Im Einzelnen zeigt:
- Figur 1:: den Grundkörper einer ersten Ausführungsform der Halterung in einer räumlichen Ansicht, schräg auf die ersten Stoßflächen und die Innenflächen der zwei Seitenwände,
- Figur 2:: die Pufferstruktur der Halterung der ersten Ausführungsform gemäß Figur 1 in einer räumlichen Ansicht,
- Figur 3:: die Pufferstruktur gemäß Figur 2 einen Eckbereichsabschnitt eines rahmenlosen PV-Moduls umgebend in einer räumlichen Ansicht,
- Figur 4:: die Halterung der ersten Ausführungsform mit dem Grundkörper gemäß Figur 1 und der Pufferstruktur gemäß Figur 2 in einer räumlichen Ansicht, schräg auf die zweiten Stoßflächen und die Innenflächen der zwei Seitenwände,
- Figur 5:: eine Anordnung zweier miteinander verbundener Halterungen der ersten Ausführungsform gemäß Figur 4 in einer räumlichen Ansicht, schräg auf die ersten Stoßflächen der Seitenwände der einen Halterung,
- Figur 6:: die Anordnung der zwei miteinander verbundenen Halterungen gemäß Figur 5, jedoch um 90 Grad gegen den Uhrzeigersinn um die gemeinsame Achse der Schnittgeraden der Seitenwände der Halterungen gedreht, in einer räumlichen Ansicht, schräg auf die ersten Stoßflächen der Seitenwände der einen Halterung und auf je eine Außenfläche der Seitenwände der zwei Halterungen,
- Figur 7:: die Anordnung der zwei miteinander verbundenen Halterungen gemäß Figur 5, in einer weiteren räumlichen Ansicht mit einem Blickwinkel von jeweils 45 Grad auf jede der Außenflächen der Seitenwände der zwei Halterungen,
- Figur 8:: die Halterung der ersten Ausführungsform gemäß Figur 4, in einer weiteren räumlichen Ansicht mit einem Blickwinkel von jeweils 45 Grad auf jede der Innenflächen der Seitenwände der Halterung,
- Figur 9:: eine zweite Ausführungsform der Halterung mit einem Grundkörper und einer Pufferstruktur in einer räumlichen Ansicht, schräg auf die zweiten Stoßflächen der zwei Seitenwände der Halterung,
- Figur 10:: eine Anordnung einer Halterung der zweiten Ausführungsform gemäß Figur 9 montiert auf einem Trägerprofil in einer räumlichen Ansicht, schräg auf die zweiten Stoßflächen der zwei Seitenwände und die Außenfläche der ersten Seitenwand der Halterung,
- Figur 11:: die Anordnung gemäß Figur 10 in einer weiteren räumlichen Ansicht, schräg auf die zweiten Stoßflächen und die Außenflächen der zwei Seitenwände der Halterung,
- Figur 12:: die Anordnung gemäß Figur 10, wobei die Halterung einen Eckbereichsabschnitt eines rahmenlosen PV- Moduls aufgenommen hat, in einer räumlichen Ansicht, schräg auf die zweiten Stoßflächen der zwei Seitenwände der Halterung,
- Figur 13:: eine dritte Ausführungsform der Halterung mit einem Grundkörper und einer Pufferstruktur in einer räumlichen Ansicht, schräg auf die zweiten Stoßflächen der zwei Seitenwände und schräg auf die Stützelemente der Halterung,
- Figur 14:: eine Halterung der dritten Ausführungsform gemäß 13 in einer räumlichen Ansicht, schräg auf die ersten Stoßflächen und die Außenflächen der zwei Seitenwände der Halterung,
- Figur 15:: eine Anordnung zweier miteinander verbundener Halterungen der dritten Ausführungsform gemäß Figur 13 in einer räumlichen Ansicht, schräg auf die Stützelemente der zwei Halterungen,
- Figur 16:: die Anordnung der zwei miteinander verbundenen Halterungen gemäß Figur 15, in einer weiteren räumlichen Ansicht, schräg auf die Außenflächen der Seitenwände der zwei Halterungen,
- Figur 17:: eine schematische Darstellung einer Regalkonstruktion gemäß Stand der Technik zum Lagern und/oder Transportieren von Flachgläsern,
- Figur 18:: eine schematische Darstellung eines Kartons gemäß Stand der Technik zum Lagern und/oder Transportieren von vertikal ausgerichteten rahmenlosen PV-Modulen,
- Figur 19:: ein Formteil-Glied eines Modularen Stecksystems zur Stapelung von PV-Modulen gemäß Stand der Technik,
- Figur 20:: einen Stapel von mehreren vertikal ausgerichteten, gerahmten PV-Modulen auf einer Palette, welcher mit Hilfe einer Vielzahl von Formteil-Gliedern gemäß Figur 14 gebildet wurde,
- Figur 21:: eine vergrößerte Ansicht der oberen rechten Kante des Stapels gemäß Figur 15.

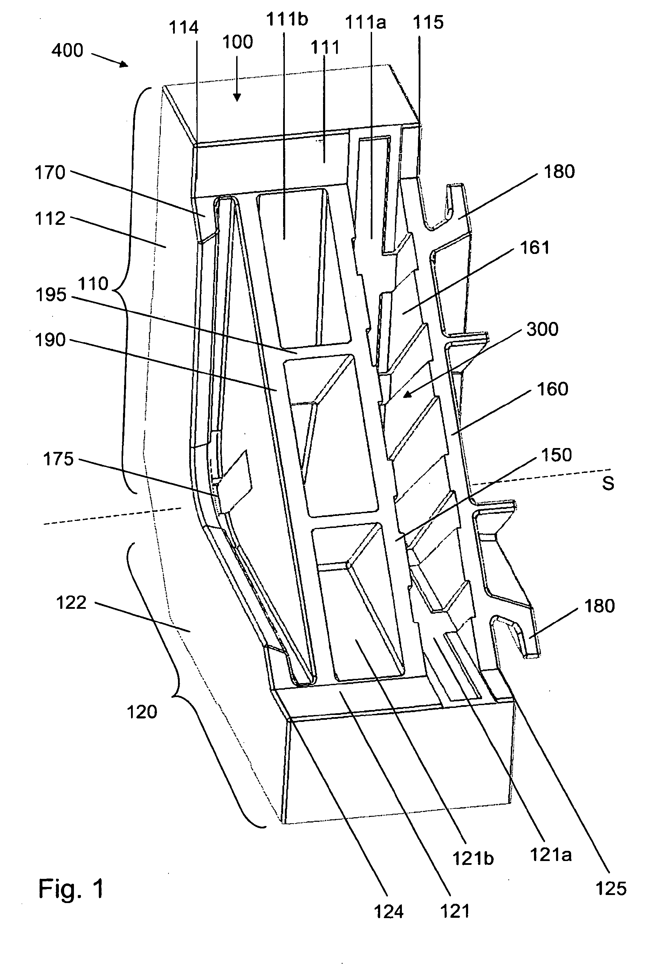

Die Figur 1 zeigt den Grundkörper 100 einer ersten Ausführungsform der Halterung 400 zum sicheren Lagern und/oder Transportieren von gerahmten oder ungerahmten PV-Modulen oder anderen Körpern, die flach und quaderförmig sind und deren Ausmaß durch drei Seiten definiert ist, wie zum Beispiel Flachgläser, Türblätter, Tisch-, Möbel- oder Steinplatten. Dabei ist nach dem Verständnis dieser Anmeldung die Dicke dieser flachen, quaderförmigen Körper durch deren kürzeste Seite definiert.

Der Grundkörper 100 hat eine erste Seitenwand 110, die längs einer Schnittgeraden S, die in den Figuren als gestrichelte Linie angedeutet ist, mit einer zweiten Seitenwand 120 in einem Verbindungswinkel von 90 Grad verbunden ist. Durch diese zwei L-förmig miteinander verbundenen Seitenwände 110, 120 ist somit die im Wesentlichen keilartige Form des Grundkörpers 100 definiert.

Die Innenfläche 111 der Seitenwand 110 und die Innenfläche 121 der Seitenwand 120 erstrecken sich jeweils längs zur Schnittgeraden S zwischen einem ersten zur Schnittgeraden S senkrechten Rand 114 bzw. 124 und einem zweiten zur Schnittgeraden S senkrechten Rand 115 bzw. 125, wobei auch zwischen den Innenflächen 111 und 121 ebenfalls ein rechter Winkel besteht.

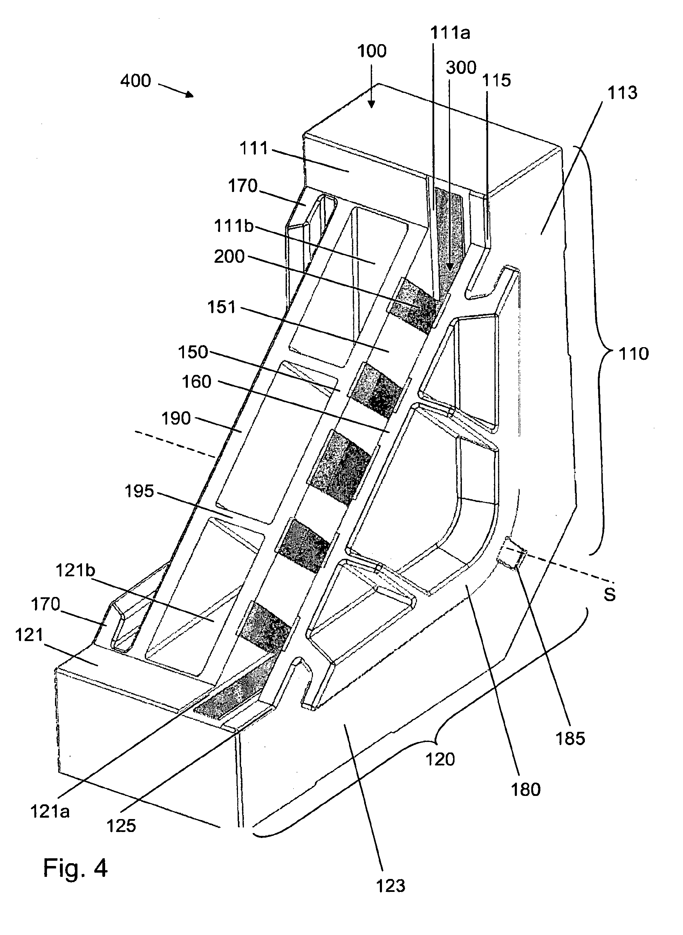

Ferner haben die Seitenwände 110 und 120 erste Stoßflächen 112 und 122, die an den ersten Rändern 114 und 124 eine erste Kante mit den Innenflächen 111 und 121 bilden. An den zweiten Rändern 115 und 125 bilden die Innenflächen 111 und 121 eine zweite Kante mit den zweiten Stoßflächen 113 und 123 der Seitenwände 110 und 120, wobei die zweiten Stoßflächen aufgrund der Perspektive in der Figur 1 nicht zu sehen sind, jedoch in der Figur 4.

Der Grundkörper 100 umfasst ferner ein erstes Stützelement 150 und davon längs der Schnittgeraden S beabstandet ein zweites Stützelement 160. Beide Stützelemente 150 und 160 sind in dieser Ausführungsform der Halterung 400 zugleich an beide Innenflächen 111 und 121 angeformt und bilden jeweils eine geschlossene dreieckige Wand.

Zum Einen bilden das erste Stützelement 150 und das zweite Stützelement 160 mit dem ersten Innenflächenbereich 111a, 121a, welcher sich zwischen ihnen über die Innenflächen 111 und 121 erstreckt, einen Spalt 300 zur Aufnahme und Stützung eines Eckbereichsabschnitts eines zu lagernden und/oder zu transportierenden PV-Moduls oder eines anderen flachen, quaderförmigen Körpers. Ein PV-Modul oder flacher, quaderförmiger Körper ist hierzu mit der seine Dicke definierenden Seite parallel zur Schnittgeraden S auszurichten, wobei durch die Weite des Spalts 300, also den Abstand zwischen dem ersten und dem zweiten Stützelement 150 und 160, die maximale Dicke eines aufnehmbaren Körpers vorgegeben ist.

Zum Anderen dienen die Stützelemente 150 und 160 in dieser Ausführungsform der Halterung 400 auch zur Stützung der Seitenwände 110 und 120 und somit zur weiteren Stabilisierung der Halterung 400.

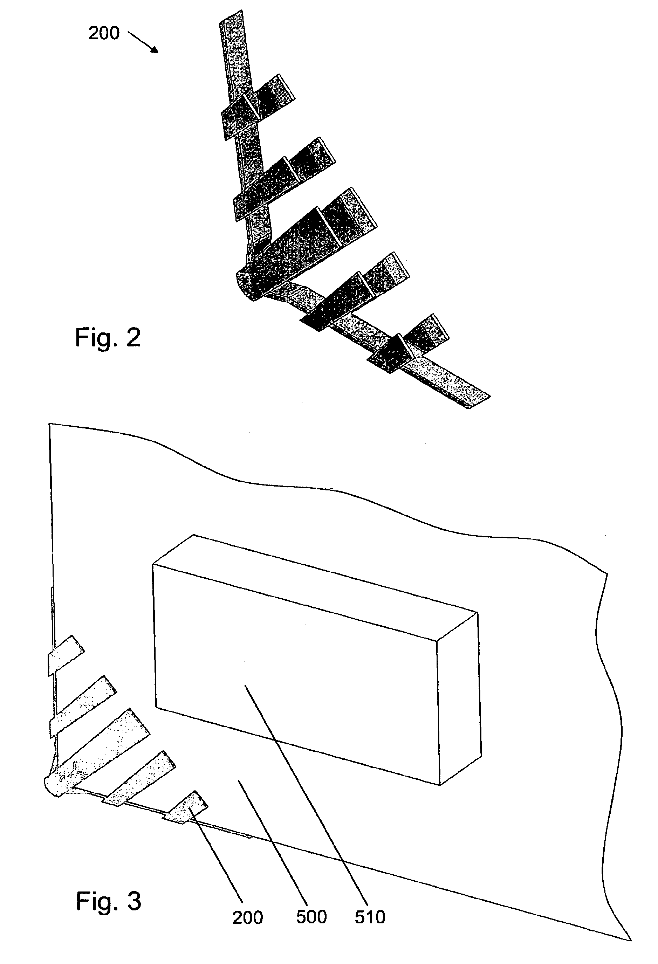

Die Figur 1 zeigt nur den Grundkörper 100 einer Halterung 400 der ersten Ausführungsform. Der Grundkörper gemäß Figur 1 ist jedoch für das Aufbringen einer Pufferstruktur, wie sie die Figur 2 zeigt, auf die den Spalt 300 umgebenden Flächen des ersten und des zweiten Stützelements 150, 160 sowie auf den ersten Innenflächenbereich 111a, 121a geeignet angepasst. Die den Spalt 300 umgebenen Flächen weisen deshalb Vertiefungen auf, die der Form der Pufferstruktur gemäß Figur 2 entsprechen, und dank derer eine derartige Pufferstruktur, nachdem sie aufgebracht wurde, besseren Halt in dem Spalt 300 findet. Die gesamte Halterung dieser Ausführungsform mit dem Grundkörper und der aufgebrachten Pufferstruktur zeigen die Figuren 4, 5 und 8.

Es wird jedoch angemerkt, dass auch andere Ausführungsformen der Halterung 400 vorgesehen sind, bei denen je nach Art und Form der aufzubringenden Pufferstruktur die Vertiefungen an den den Spalt 300 umgebenen Flächen entsprechend anders als in Figur 1 gezeigt ausgestaltet sein können. Ferner sind Ausführungsformen der Halterung 400 möglich, bei denen die den Spalt 300 umgebenen Flächen keinerlei Vertiefungen aufweisen, die aber trotzdem für das Aufbringen einer Pufferstruktur geeignet sind. Die Pufferstruktur wird im Folgenden in Verbindung mit Figur 2 und weiteren Figuren noch genauer erläutert werden.

Des Weiteren kann in einer anderen als der in Figur 1 gezeigten Ausführungsform der Halterung 400 das erste und/oder das zweite Stützelement 150 bzw. 160 statt als dreieckige Wand auch als Vorsprung in Form einer durchgängigen Feder ausgebildet sein, die senkrecht zur Schnittgeraden S entlang der Innenflächen 111 und 121 verläuft. Alternativ zu einer durchgehenden Feder kann auch eine Anzahl zapfenartiger Vorsprünge an die Innenfläche 111 und/oder 121 angeformt sein, so dass es mehrere erste Stützelemente 150 und/oder mehrere zweite Stützelemente 160 gibt, die dann jeweils in einer sich quer zur Schnittgeraden S erstreckenden gemeinsamen ersten bzw. zweiten Ebene liegen.

Wie aus der Figur 1 weiter ersichtlich ist, sind die Seitenwände 110 und 120 noch deutlich breiter als der Spalt 300 weit ist, so dass die Innenflächen 111 und 121 neben dem ersten Stützelement 150 außerhalb des Spalts 300 noch einen zweiten Innenflächenbereich 111b, 121b aufweisen. Dies ist zum Beispiel erforderlich, um die Halterung für PV-Module nutzen zu können, die in der Regel an ihrer Rückseite eine von dem Modul abstehende Anschlussdose haben, wie es in Figur 3 zu sehen ist.

Der Grundkörper 100 umfasst in dieser Ausführungsform der Halterung 400 zusätzlich zu den Stützelementen 150 und 160 noch ein drittes Stützelement 190, welches längs der Schnittgeraden S beabstandet von dem ersten Stützelement 150 und im Gebiet des zweiten Innenflächenbereichs 111b, 121b ebenfalls an beide Innenflächen 111 und 121 angeformt ist. Auch das dritte Stützelement 190 bildet eine geschlossene dreieckige Wand, und trägt zusammen mit den längs zur Schnittgeraden S verlaufenden Versteifungsrippen 195, die zwischen dem dritten und dem ersten Stützelement angeordnet sind, nochmals zur Stabilisierung der Halterung 400 bei.

Weiterhin umfasst der Grundkörper 100 ein erstes und ein zweites Sicherungselement 170 und 180. Das erste Sicherungselement 170 ist entlang der erste Ränder 114 und 124 als eine durchgängige Feder mit einem trapezförmigen Querschnitt an die die Innenflächen 111 und 121 derart angeformt, dass es bündig mit den ersten Stoßflächen 112 und 122 abschließt. Das zweite Sicherungselement 180 ist entlang der zweiten Ränder 115 und 125 als eine durchgängige Auskragung, die eine dem trapezförmigen Querschnitt der Feder 170 entsprechende Nut bildet, an die Innenflächen 111 und 121 angeformt, wobei die Auskragung 180 über die zweiten Stoßflächen 113 und 123 hinausragt, wie es in der Figur 4 noch deutlicher zu sehen ist. Da das zweite Stützelement 160 in der Ausführungsform der Halterung, die die Figur 1 zeigt, wie auch das zweite Sicherungselement 180 unmittelbar entlang der zweiten Ränder 115 und 125 an die Innenflächen 111 und 121 angeformt ist, besitzen das zweite Stützelement 160 und das zweite Sicherungselement 180 einen gemeinsamen Ansatz an den Innenflächen 111 und 121.

Zusätzlich zu den Sicherungselementen 170 und 180 besitzt der Grundkörper 100 der Halterung 400 der Ausführungsform gemäß Figur 1 ein weiteres erstes Sicherungselement 175 und ein weiteres zweites Sicherungselement 185, wobei letzteres in der Figur 1 aufgrund der Perspektive nicht zu sehen ist und im Folgenden in Verbindung mit Figur 4 und weiteren Figuren beschrieben wird. Das weitere erste Sicherungselement 175 bildet ein Durchlass, der unmittelbar hinter der Feder 170 entlang der Winkelhalbierenden des Verbindungswinkels der Seitenwände 110 und 120 durch die Seitenwände hindurch verläuft und in seinem Inneren eine Kante besitzt, an der sich sein Innenmaß erweitert.

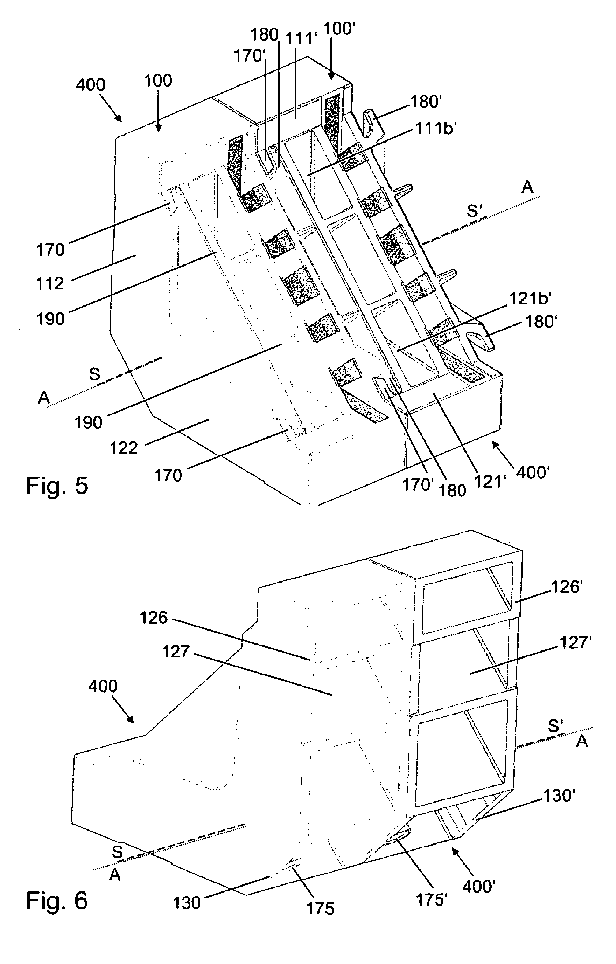

Auf das Zusammenwirken der Sicherungselemente mehrerer verbundener Halterungen wird an späterer Stelle der Beschreibung im Zusammenhang mit den Figuren 5, 6 und 7 genauer eingegangen.

Bezüglich der Figur 1 ist noch zu erwähnen, dass bei anderen Ausführungsformen der Halterung 400 die Sicherungselemente auch anders als hier gezeigt ausgebildet sein können. Allerdings stellt die Ausbildung des ersten Sicherungselements 170 als durchgängige Feder und des zweiten Sicherungselements 180 als durchgängige Auskragung eine als besonders stabil erachtete Variante dar.

Die Figur 2 zeigt ein beispielhafte Ausgestaltung der Pufferstruktur 200, welche in diesem Fall für die Halterung 400 der ersten Ausführungsform gemäß Figur 1 vorgesehen ist. Die Pufferstruktur 200 ist in Figur 2 sowie in der Figur 3 zwecks eines besseren Verständnisses ihrer Ausgestaltung ohne den Grundkörper 100 der Halterung 400 dargestellt, obwohl die Pufferstruktur gemäß dieser Ausführung keinen separaten Körper darstellt, sondern als aufgespritzter Kunststoff fest mit dem Grundkörper 100 der Halterung 400 verbunden ist. Dabei besteht die Pufferstruktur 200 aus einem Material, das weicher ist als das Material des Grundkörpers 100 gemäß Figur 1. Zwar sind sowohl die Pufferstruktur 200 als auch der Grundkörper 100 der Halterung 400 dieser ersten Ausführungsform Kunststoff-Spritzgussteile, der Kunststoff der Pufferstruktur 200 ist jedoch ein anderer und insbesondere ein weicherer als der des Grundkörpers 100. In einer anderen Ausführungsform der Halterung 400 kann der Grundkörper 100 aber auch aus einem Metall wie zum Beispiel Alu-Druckguss gefertigt sein.

Grundsätzlich sind jedoch auch andere Ausführungsformen der Halterung 400 möglich, in denen die Pufferstruktur 200 zunächst als von dem Grundkörper 100 separater Körper ausgebildet ist und die dann in den Spalt 300 des Grundkörpers 100 beispielsweise eingeklebt, eingeclipst bzw. eingerastet werden kann.

Wie aus der Figur 2 ersichtlich ist, besitzt die Pufferstruktur 200 einen mit einem Innenwinkel von 90 Grad L-förmig abgewinkelten Streifen sowie zehn weitere Streifen, die paarweise sich gegenüberliegend an 5 Stellen entlang des Verlaufs des abgewinkelten Streifens an dessen Rändern angeformt sind und sich parallel zu der Winkelhalbierenden des Innenwinkels erstrecken. Dabei sind je zwei Paar Streifen an den einen bzw. den anderen der gleichlangen Schenkel des abgewinkelten Streifens angeformt, während ein weiteres Paar Streifen unmittelbar an den Eckpunkten der Kante ansetzt, an welcher der L-förmige Streifen abgewinkelt ist.

Bei genauerer Betrachtung der Pufferstruktur 200 gemäß Figur 2 wird jedoch auffallen, dass die zwei ansonsten geraden Schenkel des abgewinkelten Streifens im Bereich des Scheitelpunkts des Innenwinkels weniger eine Kante bilden als vielmehr eine Wölbung, welche noch hinter dem Scheitelpunkt verläuft. Der sich hieraus ergebende Vorteil wird durch die Figur 3 deutlich werden.

Die Streifen jedes der fünf Paare weisen an den sich gegenüberliegenden Flächen ihrer freien Enden eine Abschrägung auf, die zu einer geringeren Dicke der Pufferstruktur 200 an diesen Stellen führt, so dass zwischen den freien Enden der Streifen eines Paares ein etwas größerer Abstand besteht als zwischen den Enden, mit denen die Streifen an die Ränder des abgewinkelten Streifens angeformt sind. Der sich hieraus ergebende Vorteil wird durch die Figur 4 und weitere Figuren deutlich werden.

Die Figur 3 zeigt die Pufferstruktur 200 gemäß Figur 2, wie sie einen Eckbereich eines rahmenlosen PV-Moduls 500 umgibt, das mit seiner Anschlussdose 510 nur schemenhaft angedeutet ist. Da das PV-Modul 500 nicht dicker ist als der zuvor beschriebene Abstand zwischen den Streifen jedes der fünf Paare, sitz der Eckbereich des Moduls 500 passgenau zwischen den fünf Streifenpaaren und dem L-förmigen Streifen der Pufferstruktur 200. Dabei liegt der L-förmige Streifen zwar an den die Dicke des PV-Modul bestimmenden Seitenflächen an, berührt jedoch aufgrund seiner zuvor beschriebenen Wölbung nicht die Kante dieser zwei Seitenflächen. Aufgrund des somit zwischen der Kante und der Wölbung verbleibenden Freiraums ist die Kante besonders gut vor Beschädigung geschützt.

Die Figur 4 zeigt die Halterung 400 der ersten Ausführungsform, diesmal jedoch sowohl mit dem Grundkörper 100 gemäß Figur 1 als auch mit der Pufferstruktur 200 gemäß Figur 2. Zudem sind aufgrund der gegenüber Figur 1 anderen Perspektive auf die Halterung 400 nun nicht nur die zweiten Stoßflächen 113 und 123 der Seitenwände 110 und 120 des Grundkörpers 100 zu sehen, sondern auch die beiden zweiten Sicherungselemente 180 und 185.

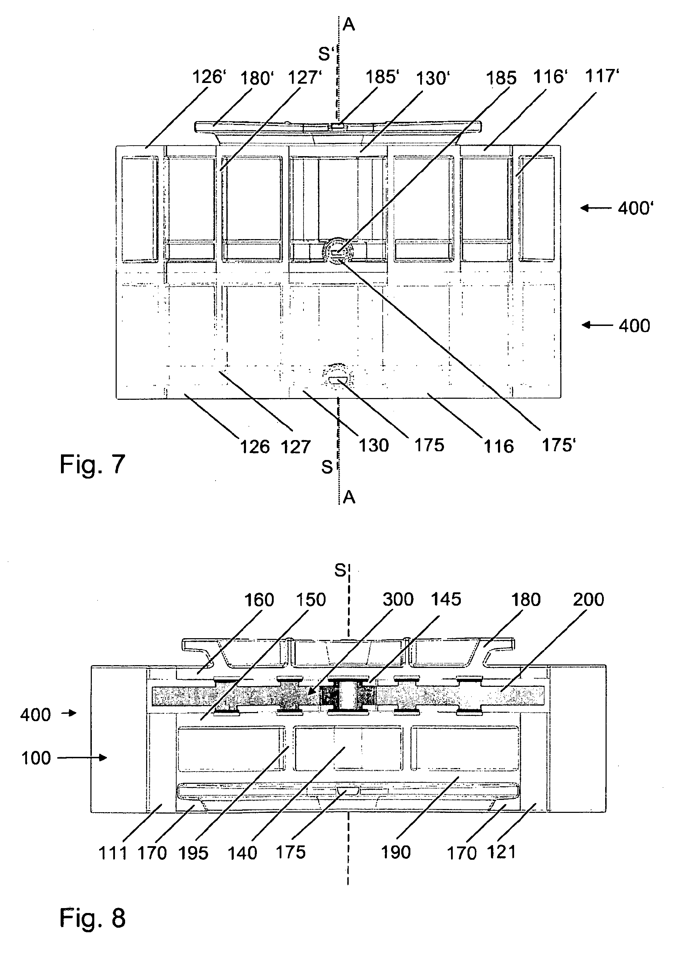

Wie bereits im Zusammenhang mit der Figur 1 beschrieben, ist das zweite Sicherungselement 180 als eine eine Nut bildende Auskragung ausgebildet, welche entlang der zweiten Ränder 115 und 125, einen gemeinsamen Ansatz mit dem zweiten Stützelement 160 besitzend, an die Innenflächen 111 und 121 angeformt ist und über die zweiten Stoßflächen 113 und 123 hinausragt. Dort wo die Innenflächen 111 und 121 im rechten Winkel aufeinander treffen, ist folglich auch die Auskragung 180 entsprechend abgewinkelt. An dieser Ecke, welche jedoch abgerundet ist, am äußersten Rand der Auskragung 180 ist das zweite Sicherungselement 185 in Form einer Rastnase bzw. eines Rastclips angebracht, die bzw. der längs der Winkelhalbierenden zu den Außenflächen 116 und 126 der Seitenwände 110 und 120 weist, die zum Beispiel in den Figuren 6 und 7 zu sehen sind.

Zur Stabilisierung der Auskragung 180, ist diese, wie in Figur 4 zu sehen, mit zwei Versteifungsrippen gegen die dreieckige Wand des zweiten Stützelements 160 abgestützt.

Auf die den Spalt 300 umgebenden Flächen des ersten und des zweiten Stützelements 150, 160 sowie auf den ersten Innenflächenbereich 111a, 121a ist nunmehr die Pufferstruktur 200 gemäß Figur 2 aufgebracht, für die der Grundkörper 100 der Halterung 400 der ersten Ausführungsform geeignet angepasst ist. Die Pufferstruktur 200 findet daher guten Halt in den ihrer Form entsprechenden und in Zusammenhang mit Figur 1 beschriebenen Vertiefungen. Es versteht sich, dass die Pufferstruktur 200, um einen Eckbereich eines PV-Moduls 500 in dem Spalt 300 auch polstern und fixieren zu können, ausreichend dick ist, dass sie aus diesen Vertiefungen heraus noch über die den Spalt 300 begrenzenden Flächen ragt. Lediglich unmittelbar am Eingang des Spaltes schließen die abgeschrägten und daher dünneren freien Enden der fünf Streifenpaare der Pufferstruktur 200 nicht nur bezüglich der Länge sondern auch bezüglich der Dicke bündig mit den Wandflächen der Stützelemente 150 und 160 ab. Die Weite des Spalts 300 wird also nicht schon unmittelbar an dessen Eingang durch die Pufferstruktur 200 verringert, sondern sie verschmälert sich zunehmend, bis die Pufferstruktur ihre volle Dicke hat. Somit bietet die Pufferstruktur 200 auch noch eine Art Trichterwirkung, wenn ein Eckbereichsabschnitt eines PV-Moduls 500 in den Spalt 300 einer Halterung 400 eingesetzt wird bzw. eine Halterung 400 mit dem Spalt 300 auf einen Eckbereich eines PV-Moduls 500 aufgesteckt wird.

Bei dieser Ausführungsform der Halterung 400 ist die Pufferstruktur 200 derart aufgebracht, dass sie genau dort, wo die den Spalt 300 umgebenden Flächen 151, 161, 111a und 121a die zuvor beschriebenen Vertiefungen aufweisen, aufgespritzt und somit fest mit dem Grundkörper 100 verbunden ist.

Wie bereits erwähnt, kann die Pufferstruktur 200 gemäß anderen Ausführungsformen der Halterung 400 zunächst auch ein von dem Grundkörper 100 separater Körper sein, der dann auf die den Spalt 300 umgebenden Flächen 151, 161, 111a und 121a geklebt wird und/oder der in den Spalt 300 eingeclipsbar bzw. eingerastbar ist.

Neben den unterschiedlichen Arten, wie eine Pufferstruktur aufgebracht sein kann, sind freilich auch andere Formen bzw. Muster einer Pufferstruktur, als die in den Figuren gezeigte Streifenform, möglich. So kann zum Beispiel eine Pufferstruktur in Form einer Vielzahl von runden Noppen oder netzartig auf die jeweils dem Spalt 300 zugewandten Flächen des wenigstens eines ersten und wenigstens eines zweiten Stützelements 150 und 160 sowie auf den ersten Innenflächenbereich 111a, 121a aufgespritzt sein.

Die Figur 5 zeigt eine Anordnung zweier miteinander verbundener Halterungen 400 und 400' der ersten Ausführungsform gemäß Figur 4 mit einem Grundkörper 100 bzw. 100' und einer Pufferstruktur 200 bzw. 200'.

So ist in der Figur 5 zu sehen, dass die zweiten Stoßflächen der Halterung 400 die ersten Stoßflächen der Halterung 400' berühren und die Auskragung 180 der Halterung 400 derart hinter die Feder 170' der Halterung 400' greift, dass die Feder 170' passgenau in der von der Auskragung 180 gebildeten Nut sitzt. Dadurch sind die Halterungen gegen ein Verrutschen längs' der gemeinsamen Achse A in der die Schnittgeraden S und S' ihrer Seiten liegen, gesichert.

Zwar stellt bereits eine Halterung nur mit Sicherungselementen, die, wenn die Halterung mit einer weiteren Halterung verbunden ist, allein ein Verrutschen längs der gemeinsamen Achse der Schnittgeraden verhindern, einen erfindungsgemäßen Gegenstand dar. Die in Figur 5 gezeigten Halterungen gehören jedoch zu einer bevorzugten Ausführungsform, welche, wie bereits erwähnt, über weitere Sicherungselemente verfügt.

Bei genauerer Betrachtung der zwei miteinander verbundenen Halterungen 400 und 400' gemäß Figur 5 wird auffallen, dass - abgesehen von der anhaftenden Wirkung der Pufferstruktur 200 - die Sicherungselemente 180 und 170' allein noch nicht verhindern könnten, dass zum Beispiel die Halterung 400' in Richtung der Außenflächen 116', 126' ihrer Seitenwände (vgl. Figuren 6 und 7), also quer zur Achse A, verrutscht. Um eben dies auch zu unterbinden, verfügen die Halterungen 400 und 400' über je ein weiteres erstes und weiteres zweites Sicherungselement, von denen in der Figur 5 jedoch nur der Durchlass 175, der in Verbindung mit der Figur 1 beschrieben wurde, an der Halterung 400 zu sehen ist.

Stellt man sich mit Blick auch auf die Figur 7 aber vor, dass die Halterung 400' auch einen solchen Durchlass 175' besitzt, und dass sich an der Ecke der Auskragung 180 der Halterung 400 noch eine Rastnase 185 befindet, wie sie zuvor in Verbindung mit Figur 4 beschrieben wurde, dann ist klar, dass die Rastnase der Halterung 400 in den Durchlass der Halterung 400' eingreift und an der Kante in dessen Inneren einrastet.

Während die Auskragung 180 die Feder 170' zwar hintergreift aber letztlich auf der Innenflächen 111' und 121' nur aufliegt, ragt die an der Auskragung 180 befindliche Rastnase 185 sozusagen noch durch die Innenflächen in die Seitenwände hinein und verrastet zusätzlich an der Kante im Inneren des Durchlasses 175' der Halterung 400'.

Dank dieser weiteren Sicherungselemente 185 und 175' sind die zwei verbundenen Halterungen 400 und 400' auch gegen ein Verrutschen quer zur Achse A bzw. längs der Seitenwände gesichert.

Es versteht sich, dass mehr als nur zwei Halterungen auf diese Weise zu einer Reihe quasi beliebiger Länge verbindbar sind. So könnte zum Beispiel eine weitere Halterung der gleichen Ausführungsform mit der Halterung 400 an deren Stoßflächen 112 und 122 verbunden werden. Hierzu wäre die weitere Halterung zunächst entsprechend der Halterung 400 auszurichten und so zu positionieren, dass die Nut der Auskragung der weiteren Halterung und die Feder 170 der Halterung 400 sich mit etwa gleichmäßigem Abstand in einer gemeinsamen Ebene gegenüberliegen. Anschließend ist die weitere Halterung längs der Winkelhalbierenden des Verbindungswinkels der Seitenwände so lange auf die Halterung 400 zu zu bewegen, bis die Schnittgeraden der Seitenwände beider Halterungen schließlich in einer gemeinsamen Achse liegen und die Sicherungselemente vollständig ineinandergreifen. Mit einer umgekehrten Bewegung längs der Winkelhalbierenden ließe sich die weitere Halterung von der Halterung 400 wieder lösen, jedoch müsste zunächst die Rastnase der weiteren Halterung, welche an der Kante im Inneren des Durchlasses 175 der Halterung 400 einrastet ist, aus ihrer Verrastung gelöst werden. Wie dies möglich ist, wird in Zusammenhang mit Figur 7 erläutert.

Aus der Figur 5 lässt sich jedoch noch erkennen, dass zum Beispiel aufgrund des zweiten Innenflächenbereichs 111b', 121b' außerhalb des Spalts 300' ein gewisser zusätzlicher Abstand zwischen dem Spalt 300' der Halterung 400' und dem Spalt 300 der Halterung 400 besteht. Würde der Eckbereich eines PV-Moduls 500 gemäß Figur 3, das an seiner Rückseite noch einen Vorsprung 510 in Form einer Anschlussdose besitzt, in den Spalt 300' eingesetzt werden, wobei die später der Sonne zugewandte Vorderseite des Moduls 500 in Richtung des zweiten Sicherungselements 180' weist, dann dürfte die Anschlussdose 510 maximal soweit von der Rückseite des Moduls vorspringen, wie der zweite Innenflächenbereich breit ist. Sofern dies gewährleistet wäre, bestünde keine Gefahr, dass die Anschlussdose 510 in Berührung mit einem weiteren, im Stapel benachbarten PV-Modul kommt, welches mit einem Eckbereich im Spalt 300 der Halterung 400 stecken würde.

Die Figur 6 zeigt die zwei miteinander verbundenen Halterungen 400 und 400' gemäß Figur 5, jedoch sind diese nun um 90 Grad gegen den Uhrzeigersinn um die gemeinsame Achse A der Schnittgeraden S und S' ihrer Seitenwände gedreht angeordnet. Daher sind in der Figur 6 die Außenflächen 126 und 126' der zweiten Seitenwände zu sehen, wobei es sich bei dieser Ausführungsform der Halterungen um offene Flächen handelt, die erkennen lassen, dass die Seitenwände nicht massiv, sondern des geringeren Materialbedarfs wegen vielmehr Hohlkörper sind, in deren Inneren zur Stabilisierung längs zur Schnittgeraden S bzw. S' verlaufende Versteifungsrippen 127 bzw. 127' rückwärtig an die Stoßflächen und die Innenfläche angeformt sind.

Zudem ist nun gut zu sehen, dass bei dieser Ausführungsform der Halterungen 400 und 400' die Außenflächen der Seitenwände keine Kante mit einem Außenwinkel von 270 Grad bilden, sondern dass diese Kante abgefast ist, so dass eine Fase als zusätzliche Fläche 130 bzw. 130' besteht, die mit jeder der Außenflächen eine Kante mit einem Außenwinkel von 225 Grad bildet. Beide Außenflächen der Halterungen 400 und 400', so wie die Flächen 130 und 130' zeigt die Figur 7.

An den Flächen 130 bzw. 130' münden die Durchlässe 175 bzw. 175', die entlang der Winkelhalbierenden der Verbindungswinkel der Seinwände der Halterungen 400 bzw. 400' verlaufen und an ihrer Mündung an den Flächen 130 bzw. 130' ein größeres Innenmaß aufweisen, als an ihrem anderen Ende. Hinsichtlich des Zusammenwirkens insbesondere des Durchlasses 175' der Halterung 400' mit der Rastnase der Halterung 400 wird nochmals auf die Figur 7 verwiesen.

Stellt man sich vor, dass die zwei Halterungen 400 und 400' der Anordnung gemäß Figur 5 und die zwei Halterungen 400 und 400' der Anordnung gemäß Figur 6 sich auf einer horizontalen Unterlage, beispielsweise auf einer Transportpalette, direkt gegenüberstehen und zwar mit einem Abstand zwischen den Innenflächen der senkrechten Seitenwände der sich gegenüberstehen Halterungen 400 und 400 bzw. 400' und 400', der der Breite von zu lagernden und/oder zu transportierenden PV-Modulen oder anderen flachen quaderförmigen Körpern wie Flachgläsern entspricht, dann ist im Prinzip der Anfang zur Bildung eines Stapels von vertikal ausgerichteten rahmenlosen PV-Modulen bzw. Flachgläsern mittels des erfindungsgemäßen modularen Stapelsystems gemacht.

Im Rahmen dieser Anmeldung und insbesondere nachfolgend wird ein Stapel von rahmenlosen PV-Modulen oder anderen flachen, quaderförmigen Körpern, die nicht in jeweils horizontaler Ausrichtung übereinander aufgeschichtet sind, sondern in jeweils vertikaler Ausrichtung, also mit der ihre Dicke definierenden Seite parallel zu einer horizontalen Unterlage, nebeneinander geschichtet sind, auch als Querstapel bezeichnet. Insofern werden also rahmenlose PV-Module wie auch Flachgläser insbesondere in einem Querstapel gelagert bzw. transportiert. Es versteht sich dabei, dass jeder der vier Eckbereiche eines PV-Moduls in einem Stapel wie auch in einem Querstapel jeweils in einer gemeinsame Achse mit den entsprechenden Eckbereichen der anderen PV-Module im Stapel bzw. Querstapel liegt.

Angenommen es sollen 20 rahmenlose PV-Module quergestapelt werden, dann sind beginnend an den ersten Stoßflächen der zwei sich gegenüberstehenden Halterungen 400 und 400 entsprechen der oben beschriebenen Vorgehensweise nach und nach jeweils 18 weitere Halterungen anzusetzen und miteinander zu verbinden, so dass sich schließlich zwei Reihen aus je 20 Halterungen mit gleichbleibendem Abstand auf der Transportpalette gegenüberstehen.

Nach diesem ersten Schritt des Bildens und Platzierens zweier Reihen von Halterung auf einer horizontalen Unterlage, ist in einem zweiten Schritt das erste PV-Modul in eine vertikale Ausrichtung zu bringen, das heißt, es ist mit den seine Dicke definierenden Seiten bzw. Seitenflächen parallel zu den zwei gemeinsamen Achsen auszurichten, in denen jeweils die Schnittgeraden von 20 Halterungen einer der beiden Reihen liegen. Dabei spielt es im Wesentlichen keine Rolle, ob das PV-Modul mit seiner längsten oder zweitlängsten Seite parallel zur horizontalen Unterlage ausgerichtet wird. Entscheidend ist, dass die Halterungen entsprechend dem Abstand zwischen den zwei unteren Eckbereichen beabstandet sind. In einem dritten Schritt kann das PV-Modul mit seinen beiden unteren Eckbereichen in die Spalte der zwei sich gegenüberstehen Halterungen, die als letzte mit ihrer jeweiligen Reihe verbunden wurden, von oben kommend senkrecht eingesetzt werden. Und in einem vierten Schritt ist je eine weitere Halterung mit ihrem Spalt auf eine der zwei oberen Eckbereiche des PV-Moduls aufzusetzen. Hier ist jedoch darauf zu achten, dass die ersten und zweiten Stoßflächen bzw. Sicherungselemente der zwei Halterungen an den oberen Eckbereichen des PV-Moduls in jeweils die gleiche Richtung weisen, wie die der zwei Halterungen an den unteren Eckbereichen des PV-Moduls.

Für die übrigen 19 PV-Module sind die Schritte zwei, drei und vier jeweils zu wiederholen, wobei der vierte Schritt stets noch das Verbinden der weiteren Halterungen mit den Halterungen an den oberen Eckbereichen des vorherigen PV-Moduls umfasst. Hierzu ist die weitere Halterung zunächst entsprechend der bereits an dem oberen Eckbereich des vorherigen PV-Moduls vorhandenen Halterung auszurichten, mit welcher sie verbunden werden soll. Dann ist die weitere Halterung so zu positionieren, dass die Feder ihres ersten Sicherungselements und die Nut der Auskragung des zweiten Sicherungselements der vorhandenen Halterung sich mit etwa gleichmäßigem Abstand in einer gemeinsamen Ebene gegenüberliegen. Anschließend ist die weitere Halterung längs der Winkelhalbierenden des Verbindungswinkels der Seitenwände so lange auf die vorhandenene Halterung zuzubewegen, bis die Schnittgeraden der Seitenwände beider Halterungen schließlich in einer gemeinsamen Achse liegen und die Sicherungselemente vollständig ineinandergreifen.

Der Querstapel mit 20 PV-Modulen ist fertig, wenn schließlich auch entlang der oberen beiden Eckbereiche der einzelnen PV-Module zwei Reihen von je 20 miteinander verbundenen Halterungen entstanden sind.

Zum Abbauen des Querstapels sind die zuvor beschriebenen Schritte im Wesentlichen lediglich in umgekehrter Reihenfolge auszuführen.

Es sei erwähnt, dass mit dem erfindungsgemäßen modularen Stapelsystem grundsätzlich, und insbesondere zur Lagerung, Querstapel mit beliebig vielen rahmenlosen PV-Modulen darin anlegbar sind. Hinsichtlich der Transportierbarkeit eines Querstapels, kann dieser durchaus 32 rahmenlosen PV-Module umfassen, wobei im jeweiligen Einzelfall die Abmessungen der zu transportierenden PV-Module zu berücksichtigen sind.

Die Figur 7 zeigt die zwei miteinander verbundenen Halterungen 400 und 400' gemäß Figur 5 und 6, in einer Perspektive, die einen senkrechten Blick auf die Flächen 130 und 130' sowie einen Blickwinkel von 45 Grad auf jede der Außenflächen 116, 126, 116' und 126' bietet.

Deutlicher als in den Figuren 5 und 6 sind nun insbesondere die weiteren ersten und zweiten Sicherungselemente, also die Durchlässe 175 und 175' und die Rastnasen 185 und 185' sowohl allein als auch im Zusammenwirken zu sehen.

So ist im Inneren des Durchlasses 175 eine Kante zu erkennen, wobei der Durchlass 175 im Abschnitt zwischen seiner Mündung an der Fläche 130 und der Kante ein größeres Innenmaß besitzt als in dem hinter der Kante liegenden Abschnitt. Insbesondere ist letzterer eckig während der Abschnitt zwischen der Mündung an der Fläche 130 und der Kante rund geformt ist.

Ferner ist in der Figur 7 zu erkennen, wie die Rastnase 185 der Halterung 400 in den Durchlass 175' der Halterung 400' eingreift und an der Kante in dessen Inneren verrastet.

Wollte man die Halterungen 400 und 400' voneinander trennen, müsste man zunächst mit einem Finger oder, je nach Innenmaß des Durchlasses 175', mit einem geeigneten dünneren Werkzeug von der Mündung der an der Fläche 130' her in den Durchlass 175' eingreifen und die Rastnase 185 soweit zurückzubiegen, dass sie sich aus ihrer Verrastung löst. Anschließend kann die Halterung 400' mit einer Bewegung längs der Winkelhalbierenden des Verbindungswinkels ihrer Seitenwände soweit von der Halterung 400 entfernt werden, bis die Sicherungselemente der beiden Halterungen nicht mehr in Eingriff miteinander stehen.

Die Figur 8 zeigt die Halterung 400 der ersten Ausführungsform gemäß Figur 4 in einer Perspektive, die einen Blickwinkel von 45 Grad auf jede der Innenflächen 111 und 121 mit ihren ersten und zweiten Innenflächenbereichen 111a, 111b und 121a, 121b.

In der Figur 8 ist gut zu erkennen, dass die Innenflächen im zweiten Innenflächenbereich 111b, 121b keine eckige sondern eine abgerundete Kante 140 bilden. Die Innenflächen im ersten Innenflächenbereich 111a, 121a welcher im Spalt 300 liegt, bilden gar eine Wölbung 145, welche der Wölbung der Pufferstruktur 200 entspricht, wie sie im Zusammenhang mit den Figuren 2 und 3 beschrieben wurde.

Ferner ist auch der Durchlass 175 noch einmal gut zu sehen, welcher unmittelbar in der abgerundeten Kante 140 der Innenflächen im zweiten Innenflächenbereich 111b, 121b liegt und sich entlang der Winkelhalbierenden des Verbindungswinkels der Seitenwände bis zur Mündung an der Fase 130 durch die Seitenwände hindurch erstreckt (vgl. Figuren 6 und 7).

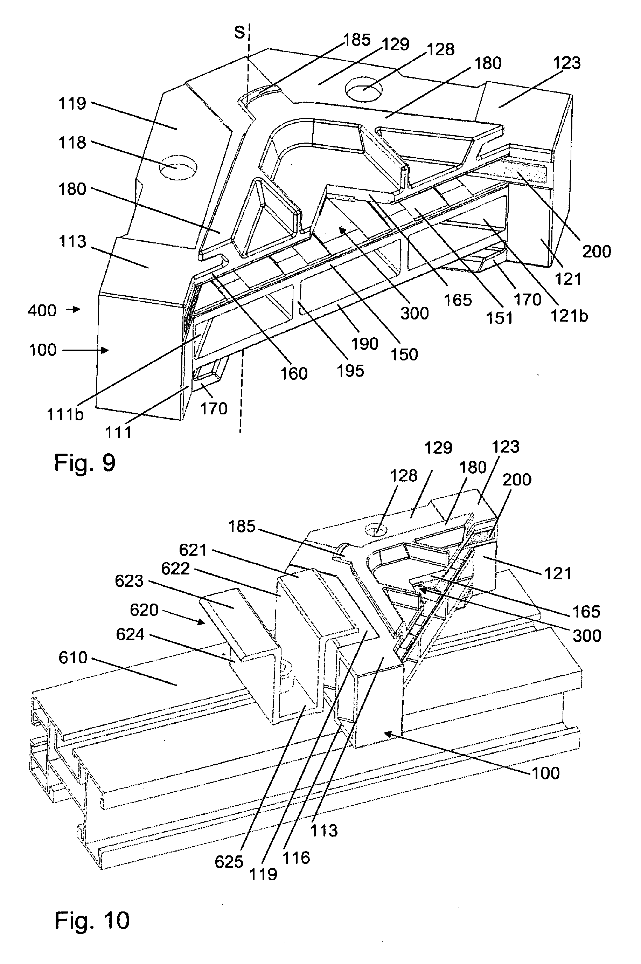

Die Figur 9 zeigt eine zweite und besonders bevorzugte Ausführungsform der Halterung 400 mit einem Grundkörper 100 und einer Pufferstruktur 200, die im Wesentlichen der ersten Ausführungsform der Halterung entspricht. Zumindest aber sechs Unterschiede zwischen beiden Ausführungsformen werden nachfolgend beschrieben.

Die Pufferstruktur 200 ist auch bei dieser zweiten Ausführungsform der Halterung 400 als weicher Kunststoff auf die die den Spalt 300 umgebenden Flächen aufgespritzt, wobei diese Flächen des Grundkörpers 100 dort, wo die Pufferstruktur 200 aufgespritzt ist, Vertiefungen ausfeisen. Eine gegenüber der ersten Ausführungsform jedoch zusätzliche, wenn auch sehr schmale Vertiefung besitzen die Wandflächen der Stützelemente 150 und 160 noch entlang der sich gegenüberliegenden Kanten, welche den Eingang des Spalts 300 begrenzen. Auch dort befindet sich nun jeweils ein schmaler Streifen der Pufferstruktur 200, der die abgeflachten Enden der fünf anderen Streifen verbindet. Somit kann gemäß der zweiten Ausführungsform die Pufferstruktur 200 ihre Polsterwirkung auch an diesen Kanten bereitstellen, die gemäß der ersten Ausführungsform zumindest abschnittweise ungepolstert geblieben wären.

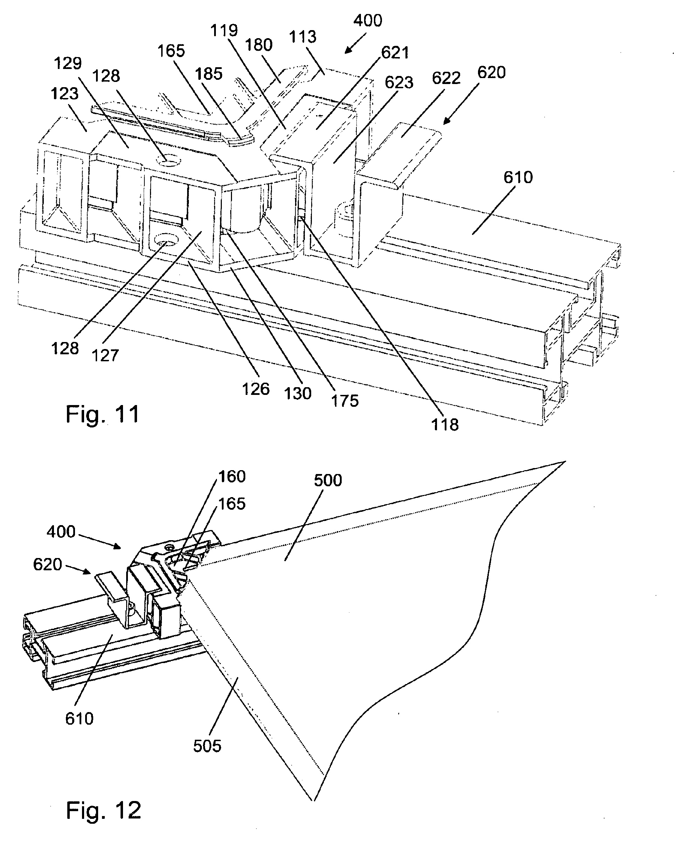

Zudem fällt mit Blick auf die Wand des zweiten Stützelements 160 auf, dass diese in der Mitte der Kante, welche an der Eingangsöffnung des Spalts 300 liegt, eine Kerbe 165 besitzt. Der sich aus dieser Kerbe 165 ergebende Vorteil wird in Verbindung mit der Figur 12 erläutert.

Ferner ist bei der Halterung 400 gemäß der zweiten Ausführungsform das weitere zweite Sicherungselement 185, das heißt die Rastnase bzw. der Rastclip, größer und stärker als bei der ersten Ausführungsform ausgebildet. Einerseits kann dieser Rastclip miteinander verbundene Halterungen 400 der zweiten Ausführungsform noch besser gegen ein Verrutschen quer zur gemeinsamen Achse deren Schnittgeraden bzw. längs deren Seitenwände sichern. Andererseits lässt sich dieser Rastclip besser bzw. einfacher wieder lösen, wenn er in dem Durchlass einer verbundenen weiteren Halterung eingerastet ist. Hierzu trägt aber auch der Durchlass bei, welcher bei Halterungen der zweiten Ausführungsform ebenfalls anders ausgebildet ist. Da der Durchlass der Halterung 400 in der Figur 9 nicht zu sehen ist, wird auf diesen noch einmal in Verbindung mit der Figur 11 eingegangen.

Als zwei weitere Unterschiede der Halterung 400 der zweiten Ausführungsform gegenüber der der ersten Ausführungsform, werden die Vertiefungen bzw. Einsparungen 119 und 129 sowie die Durchbrüche 118 und 128 an den zweiten Stoßflächen 113 und 123 auffallen. Dank dieser Merkmale ist die Halterung 400 nicht nur zum Lagern und Transportieren von gerahmten sowie rahmenlosen PV-Modulen geeignet, sondern zusätzlich auch zur Montage von PV-Modulen am Installationsort mittels Festschrauben durch die Durchbrüche 118 und 128 oder Festklemmen mittels Klemmvorrichtungen, die an den Vertiefungen 119 und 129 der Stoßflächen ansetzen.

Die Figur 10 zeigt die Halterung 400 der zweiten Ausführungsform gemäß Figur 9, die mit Hilfe eines Hutprofils 620 auf den Abschnitt eines Trägerprofils 610 montiert ist.

Die Halterung 400 liegt dabei mit ihren ersten Stoßflächen auf dem Trägerprofil 610 auf und wird von dem Hutprofil 620 an das Trägerprofil 610 gepresst.
Das Hutprofil 620 liegt mit seinem Steg 623 an der Außenfläche 116 der ersten Seitenwand der Halterung 400 an. Am oberen Ende des Stegs 623 übergreift die Abkantung bzw. Krempe 621 die zweite Stoßfläche 113 der ersten Seitenwand der Halterung 400, genau dort, wo die Stoßfläche 113 die Vertiefung 119 aufweist. Am unteren Ende des Stegs 623 ist das Hutprofil 620 mit seinem Abschnitt 625 an dem Trägerprofil 610 festgeschraubt.

Statt mit dem Hutprofil 620 wäre das Festklemmen der Halterung 400 an dem Trägerprofil 610 auch mit einem Z-Profil möglich. Der Vorteil des Hutprofils 620 gegenüber einem Z-Profil besteht jedoch darin, dass es mit seiner weiteren Abkantung 622 am oberen Ende seines weiteren Stegs 624 gleichzeitig noch eine zweite Halterung wie die Halterung 400 an dem Trägerprofil 610 festklemmen könnte.

Die Figur 11 zeigt die auf den Abschnitt eines Trägerprofils 610 gemäß Figur 10 montierte Halterung 400 der zweiten Ausführungsform aus einer Perspektive, die zum Beispiel erkennen lässt, dass der Durchlass 175 bei dieser Ausführungsform der Halterung 400 nur noch durch die abgerundete Kante 140 der Innenflächen im zweiten Innenflächenbereich 111b, 121b, jedoch nicht mehr bis an die Fläche 130 heran führt. Eine in den Durchlass 175 eingreifende Rastnase 185 einer weiteren Halterung würde einfach an der Rückseite der abgerundeten Kante 140, wo der Durchlass 175 bereits endet, einrasten und könnte ebenso einfach ohne weiteres Werkzeug nur mit einem Fingerdruck wieder aus der Verrastung gelöst werden.

Ferner ist zu sehen, dass sich die Vertiefungen 119 und 129 nur an den zweiten Stoßflächen 113 und 123 befinden, während die runden Durchbrüche 118 und 128 sowohl durch die zweiten als auch durch die die ersten Stoßflächen führen. Durch diese Durchbrüche ist auch ein direktes Festschrauben der Halterung 400 etwa an einer Unterlage aus Holz möglich.

Die Figur 12 zeigt erneut die auf den Abschnitt eines Trägerprofils 610 gemäß Figur 10 montierte Halterung 400 der zweiten Ausführungsform, wobei sich nun ein nur schematisch und nicht vollständig dargestelltes, rahmenloses PV-Modul 500 mit einem seiner Eckbereiche in dem Spalt 300 der Halterung 400 befindet.

Mit drei weiteren Halterungen wie der Halterung 400 an den übrigen drei nicht dargestellten Eckbereichen des Moduls 500, kann dieses auf einfache Weise am Installationsort, beispielsweise auf einem Dach, montiert werden, wobei praktischer Weise die gleichen Halterungen zur Montage verwendet werden können, in denen das PV-Modul 500 in einem Querstapel mit weiteren Modulen angeliefert wurde.

Mit den gestrichelten Linien soll in der Figur 12 der photovoltaisch inaktive Randbereich 505 des PV-Moduls 500 veranschaulicht werden. Dieser im Wesentlichen fertigungsbedingte Randbereich 505 trägt nicht zur Umwandlung von Licht in elektrischen Strom bei.

Die an der Bildung des Spalts 300 der Halterung 400 beteiligte Wand des zweiten Stützelements 160 würde aufgrund ihrer dreieckigen Form jedoch nicht nur Teile des inaktiven Randbereichs 505 bedecken, sondern bereits einen wenn auch nur sehr kleinen Teil der photovoltaisch aktiven Fläche des PV-Moduls. Um dies aber zu vermeiden, besitzt die Wand des Stützelements 160 eine Aussparung in Form der bereits erwähnten Kerbe 165. Somit wird ein PV-Modul 500 an dessen Eckbereichen sich Halterungen 400 befinden, nicht in seiner Leistungsfähigkeit beeinträchtigt.

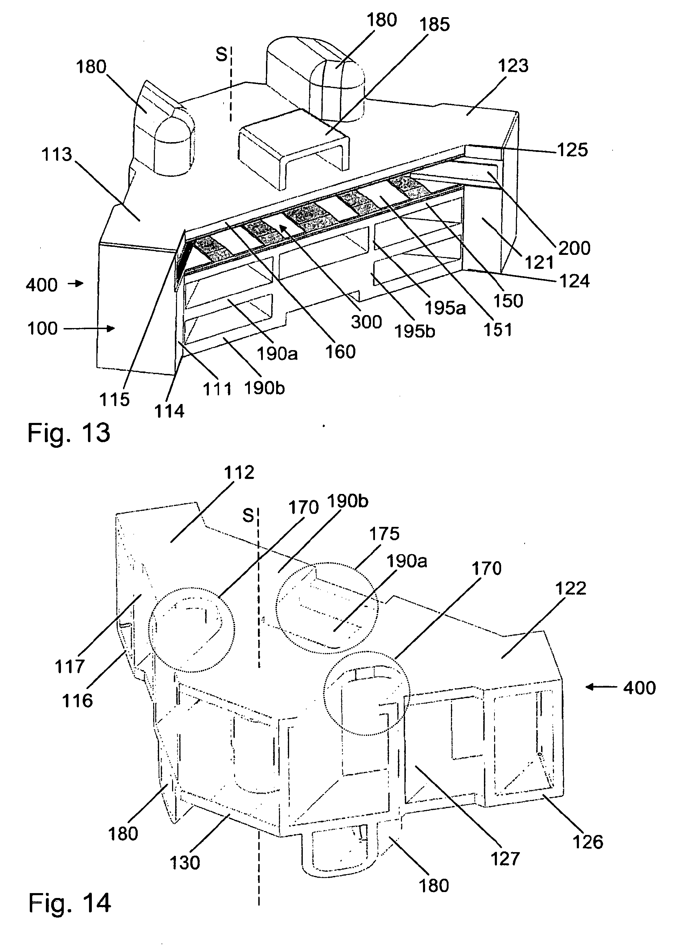

Die Figur 13 zeigt eine dritte bevorzugte Ausführungsform der Halterung 400 mit einem Grundkörper 100 und einer Pufferstruktur 200. Die Pufferstruktur 200 entspricht in dieser Ausführungsform im Wesentlichen der gemäß der zweiten Ausführungsform der Halterung 400. Der Grundkörper 100 gemäß dieser dritten Ausführungsform unterscheidet sich jedoch deutlich sowohl gegenüber dem der ersten als auch dem der zweiten Ausführungsform der Halterung 400 und zwar vor allem hinsichtlich der Sicherungselemente sowie hinsichtlich der Stützelemente.

So verfügt der Grundkörper 100 über vier Stützelemente, die alle jeweils an beide Innenflächen 111 und 121 angeformt sind und somit jeweils eine dreieckige Wand bilden. Neben dem ersten und zweiten Stützelement 150 und 160, die zusammen an der Bildung des Spalts 300 beteiligt sind, sind zusätzlich noch ein drittes und ein viertes Stützelement 190a und 190b vorhanden und zwar längs der Schnittgeraden S beabstandet voneinander und beabstandet von dem ersten Stützelement 150. Mittels längs zur Schnittgeraden S verlaufenden Stützrippen 195b ist das vierte mit dem dritten Stützelement verbunden, welches seinerseits mittels ebenfalls längs zur Schnittgeraden S verlaufenden Stützrippen 195a mit dem ersten Stützelement 150 verbunden ist.

Aufgrund der in Figur 13 gebotenen Perspektive auf die Halterung 400 sind nur deren zweite Sicherungselemente 180 und 185 zu sehen, welche in Form zweier Zapfen 180 und eines weiteren Zapfens 185 ausgebildet sind. Die in dieser Figur nicht zu sehenden jeweils entgegengesetzt passend ausgebildeten ersten Sicherungselemente 170 und 175 werden im Folgenden in Verbindung mit Figur 14 und das Zusammenwirken der ersten und zweiten Sicherungselemente bei miteinander verbundenen Halterungen der dritten Ausführungsform in Verbindung mit den Figuren 15 und 16 beschrieben.

Analog zu dem zweiten Stützelement 160, welches wie bei den zwei zuvor beschriebenen Ausführungsformen der Halterung 400 unmittelbar entlang der zweiten Ränder 115 und 125 an die Innenflächen 111 und 121 angeformt ist, ist das bei der dritten Ausführungsform vorhandene vierte Stützelement 190b unmittelbar entlang der ersten Ränder 114 und 124 an die Innenflächen 111 und 121 angeformt. Durch das bündige Abschließen des zweiten Stützelemente 160 mit den zweiten Stoßflächen 113 und 123 sowie das bündige Abschießen des vierten Stützelements 190b mit ersten Stoßflächen 112 und 122 der Seitenwände 110 und 120, tragen die Stützelemente 160 und 190b zur Vergrößerung der jeweiligen Stoßflächen bei. Der sich daraus ergebende zusätzliche Platz aufseiten der ersten und zweiten Stoßflächen wurde bei dieser dritten Ausführungsform der Halterung 400 genutzt, um dort ein weiteres zweites Sicherungselement 185 bzw. ein weiteres erstes Sicherungselement 175, welches, wie bereits erwähnt, in der Figur 13 nicht zu sehen, zu positionieren.

Die Figur 14 zeigt die Halterung 400 der dritten Ausführungsform gemäß Figur 13, jedoch aus einer anderen Perspektive, so dass nun die ersten Stoßflächen 112 und 122 und somit auch die ersten Sicherungselemente zu sehen sind, welche in Form zweier offener Hohlräume 170 - entgegengesetzt passend zu den Zapfen 180 - und eines weiteren offenen Hohlraum 175 - entgegengesetzt passend zu dem Zapfens 185 - ausgebildet sind.

In der Figur 14 sind ferner die Außenflächen 116 und 126 der Seitenwände 110 und 120 zu sehen, die wie bei der zuvor beschriebenen ersten und zweiten Ausführungsform der Halterung 400 ebenfalls nicht geschlossen sind, wobei auch die Seitenwände der Halterung 400 gemäß der dritten Ausführungsform nicht massiv, sondern als Hohlkörper mit zwischen den ersten und zweiten Stoßflächen längs zur Schnittgeraden S verlaufenden Stützrippen 117 bzw. 127 ausgebildet sind.

Die zwei offenen Hohlräume 170 sind unter Ausnutzung der Beschaffenheit der Seitenwände als Hohlkörper derart gebildet, dass jede der ersten Stoßflächen 112 und 122 eine Öffnung entsprechend der Position und dem Umriss eines der Zapfen 180 besitzt.

Ferner ist, analog zu dem aufseiten der zweiten Stoßflächen 113 und 123 an der Wandfläche des zweiten Stützelements 160 ausbildeten weiteren Zapfen 185, aufseiten der ersten Stoßflächen 112 und 122 das weitere erste Sicherungselement 175 in Form eines weiteren offenen Hohlraums an der Wandfläche des vierten Stützelements 190b ausbildet, und zwar bezüglich Position und Umriss der Öffnung entsprechend passend zu dem Zapfen 185. Dabei wird der weitere offene Hohlraum 175 in seiner Tiefe von der durch das dritte Stützelement 190a gebildeten Wand begrenzt.

Wie jedoch aus den weiteren Figuren 15 und 16 ersichtlich ist, sind alle als Sicherungselemente dienenden offenen Hohlräume tief genug ausgebildet, um darin die jeweiligen als Zapfen ausgeführten gegenteiligen Sicherungselemente einer weiteren gleichartigen Halterung vollständig aufnehmen zu können, wenn die Halterungen miteinander verbunden werden bzw. verbunden sind.

Die Figuren 15 und 16 zeigen eine Anordnung zweier miteinander verbundener Halterungen 400 und 400' der dritten Ausführungsform gemäß Figur 13 bzw. 14, wobei die Figur 15 eine Perspektive bietet, bei der die Stützelemente und die Pufferstruktur jeder Halterung zu sehen sind, während in der Perspektive der Figur 16 stattdessen die Außenflächen der Seitenwände der beiden miteinander verbundenen Halterungen zu sehen sind.

Insbesondere wird aus den Figuren 15 und 16 deutlich, dass die zweiten Stoßflächen der Halterung 400 die ersten Stoßflächen der Halterung 400' berühren, und dass die Zapfen 180 und 185 der Halterung 400 passgenau in den jeweiligen offenen Hohlräumen 170' und 175' der Halterung 400' stecken.

Dass die Eingangsöffnungen der offenen Hohlräume 170, 175 bzw. 170', 175' keinen vollständig geschlossenen Umfang haben, ist in dem Herstellungsverfahren der Halterungen dieser Ausführungsform begründet. Denn die aus einem harten Kunststoff bestehenden Grundkörper der Halterungen der dritten Ausführungsform sind im Spritzgussverfahren mit einem zweitteiligen Spritzgießwerkzeug gefertigt, dessen zwei Teile sich nur in einer Ebene trennen lassen. Eingangsöffnungen mit einem geschlossenen Umfang, positioniert inmitten in der jeweiligen Stoßfläche, würden somit eine mit diesem einfachen und kostengünstigen Herstellungsverfahren nicht zu realisierende Hinterschneidung bedeuten, da die eine Trennebene des Spritzgießwerkzeugs parallel zu den Stoßflächen der Seitenwände verläuft.

Trotzdem sichern die ersten und die entgegengesetzt passend ausgebildeten zweiten Sicherungselemente die miteinander verbundene Halterungen 400, 400' der dritten Ausführungsform gegen ein Verrutschen quer zur gemeinsamen Achse A ihrer Schnittgeraden S, S', da die ersten Sicherungselemente 170, 175 bzw. 170', 175' derart an den ersten Stoßflächen und der mit den ersten Stoßflächen bündig abschließenden Wandfläche des vierten Stützelements 190b ausgebildet sind, das der Umfang der Eingangsöffnungen der ersten Sicherungselemente 170 bzw. 170' an der Kante zu der jeweiligen Außenfläche 116, 126 bzw. 116', 126' unterbrochen ist, während dir Unterbrechung im Umfang der Eingangsöffnung des weiteren ersten Sicherungselements 175 bzw. 175' gerade in die entgegengesetzte Richtung weist.

Ein Vorteil dieser Ausführungsform der Halterung 400 mit ihren auf einem relativ einfachen Steckmechanismus beruhenden ersten und zweiten Sicherungselementen besteht darin, dass sich damit Querstapel von rahmenlosen PV-Modulen auch automatisiert erzeugen lassen, wobei von den Stapelanlagen ähnliche Schritte wie beim Erzeugen von Querstapeln von gerahmten PV-Modulen auszuführen sind.

Zunächst wird bei einem ersten rahmenlosen PV-Modul an jedem seiner vier Eckbereiche eine Halterung 400 aufgesteckt, so dass sich ein Abschnitt jedes Eckbereichs in dem Spalt 300 einer von vier Halterungen 400 befindet. Anschließend wird das erste PV-Modul in horizontaler Ausrichtung auf eine entsprechende Aufnahmevorrichtung der Anlage abgesetzt, wobei nur die ersten Stoßflächen der vier Halterungen 400 nicht jedoch das PV-Modul selbst in Berührung mit der Aufnahmevorrichtung kommen. Dann wird bei einem zweiten rahmenlosen PV-Modul von weiteren vier Halterungen 400 an jedem der vier Eckbereiche eine Halterung 400 aufgesteckt, so dass sich ein Abschnitt jedes Eckbereichs des PV-Moduls in dem Spalt 300 einer der vier weiteren Halterungen 400 befindet. Danach wird das zweite PV-Modul in horizontaler Ausrichtung von oberhalb des bereits auf der Aufnahmevorrichtung befindlichen PV-Moduls auf dieses herabgesenkt, bis die zweiten Sicherungselemente, das heißt die Zapfen, der Halterungen an dem ersten rahmenlosen PV-Modul vollständig von den ersten Sicherungselementen, also den offenen Hohlräumen, der Halterungen an dem zweiten PV-Modul aufgenommen sind und sich die Stoßflächen der Halterungen beider PV-Module berühren bzw. die weiteren Halterungen des zweiten PV-Moduls auf den Halterungen des ersten PV-Moduls aufliegen. Die Schnittgeraden miteinander verbundener Halterungen liegen auch hier wieder in einer gemeinsamen Achse. Für jedes weitere rahmenlose PV-Modul des zu bildenden Querstapels sind die zuvor für das zweite PV-Modul erläuterten Schritte zu wiederholen. Ist die gewünschte Anzahl zu stapelnder PV-Module erreicht, also zum Beispiel 25, wird der Stapel mit umlaufenden Spannbändern versehen, um insbesondere auch ein Verrutschen der Halterungen längs der gemeinsamen Achse der Schnittgeraden vorzubeugen. Daraufhin wird der gesamte Stapel unter Mitwirkung der Aufnahmevorrichtung oder einer weiteren Vorrichtung, welche kippbar ist, um 90 Grad gekippt, so dass die 25 rahmenlosen PV-Module in dem Stapel nunmehr vertikal ausgerichtet sind und der somit entstandene Querstapel wird auf andere horizontale Unterlage, zum Beispiel eine Transportpalette, abgesetzt.

Die Halterungen sind jedoch auch mit Stapelanlagen einsetzbar, die ausgebildet sind einen Stapel derart aufzubauen, das das zweite PV-Modul, nachdem es an seinen vier Eckbereichen mit weiteren Halterungen versehen wurde, von unten an das bereits in der Aufnahmevorrichtung befindliche erste PV-Modul herangeführt wird, bis die zweiten Sicherungselemente, das heißt die Zapfen, der weiteren Halterungen an dem zweiten PV-Modul vollständig von den ersten Sicherungselementen, also den offenen Hohlräumen, der Halterungen an dem ersten PV-Modul aufgenommen sind und sich die Stoßflächen der Halterungen beider PV-Module berühren bzw. die Halterungen des ersten PV-Moduls auf den weiteren Halterungen des zweiten PV-Moduls aufliegen. Für jedes weitere rahmenlose PV-Modul sind die zuvor für das zweite PV-Modul erläuterten Schritte zu wiederholen, bis die gewünschte Anzahl zu stapelnder PV-Module erreicht ist, woraufhin der Stapel mit umlaufenden Spannbändern versehen und mit Hilfe der kippbaren Aufnahmevorrichtung oder einer weiteren kippbaren Vorrichtung der Anlage um 90 Grad gekippt wird, so dass die PV-Module in dem Stapel vertikal ausgerichtet sind und der somit entstandene Querstapel schließlich auf eine auf horizontale Unterlage wie eine Transportpalette abgesetzt werden kann.

## Patentansprüche

1. Halterung (400) zum sicheren Lagern und/oder Transportieren von rahmenlosen PV-Modulen oder anderen flachen, quaderförmigen Körpern (500), deren Ausmaß durch drei Seiten und deren Dicke durch die kürzeste der drei Seiten definiert ist, umfassend
einen Grundkörper (100) aus einem ersten Material, mit - einer ersten Seitenwand (110), die längs einer Schnittgeraden (S) mit einer zweiten Seitenwand (120) verbunden ist, so dass eine keilartige Form des Grundkörpers (100) definiert ist,
wobei jede der Seitenwände (110; 120) eine Innenfläche (111; 121) hat, die sich jeweils längs zur Schnittgeraden (S) zwischen einem ersten zur Schnittgeraden (S) senkrechten Rand (114; 124) und einem zweiten zur Schnittgeraden (S) senkrechten Rand (115; 125) erstreckt,
wobei zwischen den Innenflächen (111; 121) der Seitenwände (110; 120) ein rechter Winkel besteht,
und wobei jede der Seitenwände (110; 120) eine erste Stoßfläche (112; 122) hat, die an dem ersten Rand (114; 124) eine erste Kante mit der Innenfläche (111; 121) bildet, sowie eine zweite Stoßfläche (113; 123) hat, die an dem zweiten Rand (115; 125) eine zweite Kante mit der Innenfläche (111; 121) bildet;
- wenigstens einem ersten Stützelement (150) und davon längs der Schnittgeraden (S) beabstandet wenigstens einem zweiten Stützelement (160),
wobei die Stützelemente (150, 160) an die Innenfläche (111; 121) wenigstens einer der Seitenwände (110; 120) angeformt sind,
wobei durch das wenigstens eine erste Stützelement (150) und das wenigstens eine zweite Stützelement (160) und einen ersten Innenflächenbereich (111a, 121a), welcher sich zwischen den ersten und zweiten Stützelementen (150, 160) über die Innenfläche (111; 121) wenigstens einer der Seitenwände (110, 120) erstreckt, ein Spalt (300) gebildet ist;
- wenigstens einem ersten Sicherungselement (170), welches aufseiten der ersten Stoßflächen (112, 122)wirkt und wenigstens einem zu dem ersten Sicherungselement (170) entgegengesetzt passend ausgebildeten zweiten Sicherungselement (180), welches aufseiten der zweiten Stoßflächen (113, 123) wirkt, wobei die Halterung (400) aufseiten der ersten Stoßflächen (112, 122) sowie aufseiten der zweiten Stoßflächen (113, 123) jeweils mit einer entsprechend ausgerichteten weiteren Halterung (400') lösbar verbindbar ist, derart, dass die Schnittgeraden (S; S') der Halterungen (400; 400') in einer gemeinsamen Achse (A) liegen,
wobei das wenigstens eine erste und das wenigstens eine zweite Sicherungselement (170, 180) der Halterung (400) derart ausgebildet sind, dass sie im Zusammenwirken mit dem jeweils entgegengesetzt passenden Sicherungselement (170', 180') der weiteren Halterung (400') die verbundenen Halterungen (400, 400') gegen ein Verrutschen quer zur gemeinsamen Achse (A) und/oder gegen ein Verrutschen längs der gemeinsamen Achse (A) sichern;
und ferner umfassend eine Pufferstruktur (200) aus einem zweiten, gegenüber dem ersten, weicheren Material mit einer anhaftenden Wirkung,
wobei die Pufferstruktur (200) auf den ersten Innenflächenbereich (111a, 121a) sowie jeweils auf die dem Spalt (300) zugewandte Fläche (151; 161) des wenigstens einen ersten Stützelements (150) und des wenigstens einen zweiten Stützelements (160) aufgebracht ist,
wobei der Spalt (300) ausgebildet ist, einen Eckbereichsabschnitt eines zu lagernden und/oder zu transportierenden flachen, quaderförmigen Körpers (500) aufzunehmen, der mit der seine Dicke definierenden Seite parallel zur Schnittgeraden (S) ausgerichtet ist,
und wobei die Pufferstruktur (200) ausgebildet ist, den Eckbereichsabschnitt des flachen, quaderförmigen Körpers (500) in dem Spalt (300) zu polstern und zu fixieren, sofern die Dicke des flachen, quaderförmigen Körpers (500) im Wesentlichen der Weite des Spalts (300) entspricht.

2. Halterung (400) nach vorstehendem Anspruch,
wobei das erste Material des Grundkörpers (100) ein harter Kunststoff oder ein Metall, insbesondere Alu-Druckguss, ist
und/oder wobei das zweite Material der Pufferstruktur (200) ein weicher Kunststoff ist.

3. Halterung (400) nach einem der vorstehenden Ansprüche,
wobei die Pufferstruktur (200) auf die jeweils dem Spalt (300) zugewandte Fläche (151; 161) des wenigstens einen ersten Stützelements (150) und des wenigstens einen zweiten Stützelements (160) sowie den ersten Innenflächenbereich (111a, 121a) aufgespritzt ist
oder wobei die Pufferstruktur (200) ein separater Körper ist und in den Spalt (300) einlegbar, einklebbar, einrastbar oder einclipsbar ist.

4. Halterung (400) nach einem der vorstehenden Ansprüche, wobei das wenigstens eine erste Sicherungselement (170) bzw. das wenigstens eine zweite Sicherungselement (180) als Zapfen oder als Feder ausgebildet ist
und wobei das wenigstens eine zweite Sicherungselement (180) bzw. das wenigstens eine erste Sicherungselement (170) als offener Hohlraum zur passgenauen Aufnahme des Zapfens einer entsprechend ausgerichteten weiteren Halterung (400') oder als Nut zur passgenauen Aufnahme der Feder einer entsprechend ausgerichteten weiteren Halterung (400') ausgebildet ist.

5. Halterung (400) nach Anspruch 4,
wobei der Zapfen oder die Feder an wenigstens einer ersten Stoßfläche (112, 122) bzw. an wenigstens einer zweiten Stoßfläche (113, 123) ausgebildet ist
und wobei der offene Hohlraum oder die Nut an wenigstens einer zweiten Stoßfläche (113, 123) bzw. an wenigstens einer ersten Stoßfläche (112, 122) ausgebildet ist.

6. Halterung (400) nach Anspruch 4,
wobei die Feder längs wenigstens einer der ersten Kanten bzw. längs wenigstens einer der zweiten Kanten an wenigstens einer der Innenflächen (111, 121) ausgebildet ist
und wobei die Nut durch eine Auskragung gebildet ist, die längs wenigstens einer der zweiten Kanten bzw. längs wenigstens einer der ersten Kanten an wenigstens einer der der Innenflächen (111, 121) ausgebildet ist.

7. Halterung (400) nach einem der vorstehenden Ansprüche, wobei wenigstens eines der Stützelemente (150, 160), an die Innenflächen (111, 121) beider Seitenwände (110, 120) angeformt ist.

8. Halterung (400) nach vorstehendem Anspruch, wobei das wenigstens eine Stützelement (150, 160) eine offene oder geschlossene dreieckige Wand zwischen den Innenflächen (111, 121) der Seitenwände (110, 120) bildet.

9. Halterung (400) nach einem der vorstehenden Ansprüche, wobei die ersten Ränder (114, 124) von den zweiten Rändern (115, 125) derart längs der Schnittgeraden (S) beabstandet sind, dass die Innenflächen (111, 121) breiter sind, als der Spalt (300) weit ist und somit einen zweiten Innflächenbereich (111b, 121b) außerhalb des Spalts (300) aufweisen.

10. Halterung nach einem der vorstehenden Ansprüche, wobei wenigstens eine der Seitenwände (110, 120) wenigstens einen Durchbruch (118, 128) zwischen der ersten Stoßfläche (112, 122) und der zweiten Stoßfläche (113, 123) hat.

11. Modulares Stapelsystem zum sicheren Lagern und/oder Transportieren von rahmenlosen PV-Modulen oder anderen flachen, quaderförmigen Körpern (500), umfassend
wenigstens eine erste, wenigstens eine zweite, wenigstes eine dritte und wenigstens eine vierte Halterung (400) nach einem der Ansprüche 1 bis 10,
wobei die zweite gegenüber der ersten Halterung, die dritte gegenüber der zweiten Halterung und die vierte gegenüber der dritten Halterung jeweils um 90 Grad um die Achse (A) ihrer Schnittgeraden (S) gedreht anordenbar ist, um in den Spalt (300) jeder der Halterungen einen Abschnitt eines der vier Eckbereiche eines zu lagernden und/oder zu transportierenden flachen quaderförmigen Körpers (500) aufnehmen zu können,
und wobei die wenigstens eine erste, die wenigstens eine zweite, die wenigstes eine dritte und die wenigstens eine vierte Halterung (400) mit entsprechend ausgerichteten weiteren ersten, zweiten, dritten und vierten Halterungen (400') lösbar verbindbar sind, derart, dass die Schnittgeraden (S, S') aller ersten, zweiten, dritten und vierten Halterungen jeweils in einer gemeinsamen Achse (A) liegen und dass die jeweils verbundenen Halterungen durch das Zusammenwirken ihrer ersten und zweiten Sicherungselemente (170, 180; 170', 180') gegen ein Verrutschen quer zur gemeinsamen Achse (A) und/oder gegen ein Verrutschen längs der gemeinsamen Achse gesichert sind.

12. Modulares Stapelsystem nach vorstehendem Anspruch,
wobei die wenigsten eine erste Halterung mit der Außenfläche (116) ihrer ersten Seitenwand (110) und die wenigstens eine zweite Halterung mit der Außenfläche (126) ihrer zweiten Seitenwand (120) auf einer horizontalen Unterlage anordenbar sind, derart, dass der zu lagernde und/oder zu transportierende flache quaderförmige Körper (500) mit der seine Dicke definierenden Seite parallel zu der horizontalen Unterlage ausgerichtet ist.

## Claims

1. Holder (400) for securely storing and/or transporting frameless PV modules or other flat, cuboidal bodies (500), the size of which is defined by three sides and the thickness of which is defined by the shortest one of the three sides, comprising:
a main body (100) made from a first material, having
- a first side wall (110) which is connected along an intersection line (S) to a second side wall (120) so that a wedge-like shape of the main body (100) is defined, wherein each of the side walls (110; 120) has an inner surface (111; 121) which extends in each case along the intersection line (S) between a first border (114; 124) which is perpendicular to the intersection line (S) and a second border (115; 125) which is perpendicular to the intersection line (S),
wherein a right angle is formed between the inner surfaces (111; 121) of the side walls (110; 120),
and wherein each of the side walls (110; 120) has a first abutting surface (112; 122) which forms, at the first border (114; 124), a first edge with the inner surface (111; 121), and has a second abutting surface (113; 123) which forms, at the second border (115; 125), a second edge with the inner surface (111; 121);
- at least one first support element (150) and at least one second support element (160) spaced apart therefrom along the intersection line (S),
wherein the support elements (150, 160) are integrally formed on the inner surface (111; 121) of at least one of the side walls (110; 120),
wherein a gap (300) is formed by the at least one first support element (150) and the at least one second support element (160) and a first inner surface region (111a, 121a) which extends between the first and second support elements (150, 160) over the inner surface (111; 121) of at least one of the side walls (110, 120);
- at least one first securing element (170) which acts on the side of the first abutting surfaces (112, 122) and at least one second securing element (180) which is formed to oppositely fit to the first securing element (170) and which acts on the side of the second abutting surfaces (113, 123),
wherein on the side of the first abutting surfaces (112, 122) and on the side of the second abutting surfaces (113, 123), the holder (400) is detachably connectable in each case to a correspondingly aligned further holder (400') in such a manner that the intersection lines (S; S') of the holders (400; 400') lie in one common axis (A), wherein the at least one first and the at least one second securing element (170, 180) of the holder (400) are configured in such a manner that, by interacting with the respective oppositely fitting securing element (170', 180') of the further holder (400'), they secure the connected holders (400, 400') against slipping transverse to the common axis (A) and/or against slipping along the common axis (A);
and further comprising a buffer structure (200) made from a second material which is softer than the first material and which has an adhering effect,
wherein the buffer structure (200) is applied onto the first inner surface region (111a, 121a) and in each case onto the surface (151; 161) of the at least one first support element (150) and the at least one second support element (160) which faces the gap (300),
wherein the gap (300) is configured to receive a corner region section of a flat,
cuboidal body (500) to be stored and/or to be transported which is aligned with the side defining its thickness parallel to the intersection line (S),
and wherein the buffer structure (200) is configured to cushion and to fix the corner region section of the flat, cuboidal body (500) in the gap (300) provided that the thickness of the flat, cuboidal body (500) corresponds substantially to the width of the gap (300).

2. Holder (400) as claimed in the preceding claim, wherein the first material of the main body (100) is a hard plastic or a metal, in particular die-cast aluminum, and/or wherein the second material of the buffer structure (200) is a soft plastic.

3. Holder (400) as claimed in any one of the preceding claims, wherein the buffer structure (200) is injection-molded onto the surface (151; 161) of the at least one first support element (150) and the at least one second support element (160) which faces the gap (300) in each case, as well as onto the first inner surface region (111a, 121a), or wherein the buffer structure (200) is a separate body and can be inserted, glued, latched or clipped into the gap (300).

4. Holder (400) as claimed in any one of the preceding claims, wherein the at least one first securing element (170) or the at least one second securing element (180) is formed as a pin or as a key, and wherein the at least one second securing element (180) or the at least one first securing element (170) is formed as an open cavity for fittingly receiving the pin of a correspondingly aligned further holder (400') or as a groove for fittingly receiving the key of a correspondingly aligned further holder (400').

5. Holder (400) as claimed in claim 4, wherein the pin or the key is formed on at least one first abutting surface (112, 122) or on at least one second abutting surface (113, 123), and wherein the open cavity or the groove is formed on at least one second abutting surface (113, 123) or on at least one first abutting surface (112, 122).

6. Holder (400) as claimed in claim 4, wherein the key is formed along at least one of the first edges or along at least one of the second edges on at least one of the inner surfaces (111, 121), and wherein the groove is formed by a protrusion which is formed along at least one of the second edges or along at least one of the first edges on at least one of the inner surfaces (111, 121).

7. Holder (400) as claimed in any one of the preceding claims, wherein at least one of the support elements (150, 160) is integrally formed on the inner surfaces (111, 121) of both side walls (110, 120).

8. Holder (400) as claimed in the preceding claim, wherein the at least one support element (150, 160) forms an open or closed triangular wall between the inner surfaces (111, 121) of the side walls (110, 120).

9. Holder (400) as claimed in any one of the preceding claims, wherein the first borders (114, 124) are spaced apart from the second borders (115, 125) in such a manner along the intersection line (S) that the inner surfaces (111, 121) are wider than the width of the gap (300) and thus have a second inner surface region (111b, 121 b) outside of the gap (300).

10. Holder as claimed in any one of the preceding claims, wherein at least one of the side walls (110, 120) has at least one cut-out (118, 128) between the first abutting surface (112, 122) and the second abutting surface (113, 123).

11. Modular stacking system for securely storing and/or transporting frameless PV modules or other flat, cuboidal bodies (500), comprising
at least one first, at least one second, at least one third and at least one fourth holder (400) as claimed in any one of claims 1 to 10,
wherein the second holder can be arranged with respect to the first holder so as to be rotated by 90 degrees about the axis (A) of the intersection lines (S) thereof, the third holder can be arranged with respect to the second holder so as to be rotated by 90 degrees about the axis (A) of the intersection lines (S) thereof, and the fourth holder can be arranged with respect to the third holder so as to be rotated by 90 degrees about the axis (A) of the intersection lines (S) thereof, in order to be able to receive in the gap (300) of each of the holders a section of one of the four corner regions of a flat, cuboidal body (500) to be stored and/or to be transported,
and wherein the at least one first, the at least one second, the at least one third and the at least one fourth holder (400) are detachably connectable to correspondingly aligned further first, second, third and fourth holders (400') such that the intersection lines (S, S') of all first, second, third and fourth holders each lie in one common axis (A) and that by the interaction of their first and second securing elements (170, 180; 170', 180'), each of the connected holders are secured against slipping transverse to the common axis (A) and/or against slipping along the common axis.

12. Modular stacking system as claimed in the preceding claim, wherein the at least one first holder can be arranged with the outer surface (116) of its first side wall (110) on a horizontal underlayment, and the at least one second holder can be arranged with the outer surface (126) of its second side wall (120) on a horizontal underlayment in such a manner that the flat, cuboidal body (500) to be stored and/or to be transported is aligned with the side defining its thickness parallel to the horizontal underlayment.

## Revendications

1. Fixation (400) pour le stockage et/ou le transport sécurisés de modules photovoltaïques sans cadre ou autres corps (500) plats parallélépipédiques, dont la dimension est définie par trois côtés et dont l'épaisseur est définie par le plus court des trois côtés, comportant
un corps de base (100) réalisé dans un premier matériau, avec
- une première paroi latérale (110) qui, le long d'une droite d'intersection (S), est reliée à une deuxième paroi latérale (120) de manière à définir un corps de base (100) en forme de cale,
chacune des parois latérales (110 ; 120) ayant une face intérieure (111 ; 121) s'étendant chacune le long de la droite d'intersection (S) entre un premier bord (114 ; 124), perpendiculaire à la droite d'intersection (S), et un deuxième bord (115 ; 125) perpendiculaire à la droite d'intersection (S),
un angle droit étant formé entre les faces intérieures (111 ; 121) des parois latérales (110 ; 120),
et chacune des parois latérales (110 ; 120) ayant une première surface d'about (112 ; 122) qui forme avec la face intérieure (111 ; 121) une première arête sur le premier bord (114 ; 124), ainsi qu'une deuxième surface d'about (113 ; 123) qui forme avec la face intérieure (111 ; 121) une deuxième arête sur le deuxième bord (115 ; 125) ;
- au moins un premier élément de support (150) et au moins un deuxième élément de support (160) écarté de celui-ci le long de la droite d'intersection (S),
lesdits éléments de support (150, 160) étant formés sur la face intérieure (111 ; 121) d'au moins une des parois latérales (110 ; 120),
une fente (300) étant formée par ledit au moins un premier élément de support (150) et ledit au moins un deuxième élément de support (160) et une première zone de face intérieure (111a, 121a) s'étendant entre le premier et le deuxième élément de support (150, 160) sur la face intérieure (111 ; 121) d'au moins une des parois latérales (110 ; 120) ;
- au moins un premier élément de sécurité (170), qui agit du côté des premières surfaces d'about (112, 122), et au moins un deuxième élément de sécurité (180), qui est réalisé de manière ajustée au premier élément de sécurité (170) en étant opposé à celui-ci et qui agit du côté des deuxièmes surfaces d'about (113, 123),
la fixation (400) du côté des premières surfaces d'about (112, 122) ainsi que du côté des deuxièmes surfaces d'about (113, 123) étant assemblée de manière amovible respectivement à une autre fixation (400') alignée de manière appropriée, de telle sorte que les droites d'intersection (S ; S') des fixations (400 ; 400') se situent dans un axe (A) commun,
ledit au moins un premier et ledit au moins un deuxième élément de sécurité (170, 180) de la fixation (400) étant réalisés de telle sorte que, en coopération avec l'élément de sécurité (170' ; 180') ajusté respectivement opposé de l'autre fixation (400'), ils empêchent les fixations (400, 400') assemblées de glisser transversalement à l'axe (A) commun et/ou de glisser le long de l'axe (A) commun ;
et comportant, en outre, une structure amortisseuse (200) réalisée dans un deuxième matériau plus souple que le premier matériau et ayant une action adhésive,
ladite structure amortisseuse (200) étant appliquée sur la première zone de face intérieure (111a, 121a), ainsi que respectivement sur la surface (151 ; 161), orientée vers la fente (300), dudit au moins un premier élément de support (150) et dudit au moins un deuxième élément de support (160),
la fente (300) étant réalisée pour recevoir une partie de la zone de coin d'un corps (500) plat parallélépipédique à stocker et/ou transporter, lequel est orienté parallèlement à la droite d'intersection (S) avec le côté définissant son épaisseur,
et ladite structure amortisseuse (200) étant réalisée pour capitonner et fixer la zone de coin du corps (500) plat parallélépipédique dans la fente (300), dans la mesure où l'épaisseur du corps (500) plat parallélépipédique correspond sensiblement à la largeur de la fente (300).

2. Fixation (400) selon la revendication précédente, dans laquelle le premier matériau du corps de base (100) est une matière plastique dure ou un métal, en particulier de l'aluminium coulé sous pression,
et/ou dans laquelle le deuxième matériau de la structure amortisseuse (200) est une matière plastique souple.

3. Fixation (400) selon l'une quelconque des revendications précédentes,
dans laquelle la structure amortisseuse (200) est appliquée par projection sur la surface (151 ; 161), orientée vers la fente (300), dudit au moins un premier élément de support (150) et dudit au moins un deuxième élément de support (160), ainsi que sur la première zone de face intérieure (111a, 121a),
ou dans laquelle la structure amortisseuse (200) est un corps séparé et peut être posée, collée, encliquetée ou clipsée dans la fente (300).

4. Fixation (400) selon l'une quelconque des revendications précédentes,
dans laquelle ledit au moins un premier élément de sécurité (170) ou ledit au moins un deuxième élément de sécurité (180) sont réalisés sous forme de téton ou sous forme de languette,
et dans laquelle ledit au moins un deuxième élément de sécurité (180) ou ledit au moins un premier élément de sécurité (170) sont réalisés sous forme de cavité ouverte pour recevoir sans jeu le téton d'une autre fixation (400') orientée de manière appropriée ou sous forme de rainure pour recevoir sans jeu la languette d'une autre fixation (400') orientée de manière appropriée.

5. Fixation (400) selon la revendication 4,
dans laquelle le téton ou la languette sont réalisés sur au moins une première surface d'about (112, 122) ou sur au moins une deuxième surface d'about (113, 123),
et dans laquelle la cavité ouverte ou la rainure sont réalisés sur au moins une deuxième surface d'about (113, 123) ou sur au moins une première surface d'about (112, 122).

6. Fixation (400) selon la revendication 4,
dans laquelle la languette est réalisée sur au moins une des faces intérieures (111, 121) le long d'au moins une des premières arêtes ou le long d'au moins des deuxièmes arêtes,
et dans laquelle la rainure est constituée par une saillie qui est réalisée sur au moins une des faces intérieures (111, 121) le long d'au moins une des deuxièmes arêtes ou le long d'au moins des premières arêtes.

7. Fixation (400) selon l'une quelconque des revendications précédentes, dans laquelle au moins un des éléments de support (150, 160) est formé sur les faces intérieures (111, 121) des deux parois latérales (110, 120).

8. Fixation (400) selon la revendication précédente, dans laquelle ledit au moins un élément de support (150, 160) forme une paroi triangulaire ouverte ou fermée entre les faces intérieures (111, 121) des parois latérales (110, 120).

9. Fixation (400) selon l'une quelconque des revendications précédentes, dans laquelle les premiers bords (114, 124) sont écartés des deuxièmes bords (115, 125) le long de la droite d'intersection (S), de telle sorte que les faces intérieures (111, 121) sont plus larges que la largeur de fente (300) et, par conséquent, comportent une deuxième zone de face intérieure (111b, 121b) en dehors de la fente (300).

10. Fixation (400) selon l'une quelconque des revendications précédentes, dans laquelle au moins une des parois latérales (110, 120) possède au moins une percée (118, 128) entre la première surface d'about (112, 122) et la deuxième surface d'about (113, 123).

11. Système d'empilement modulaire permettant le stockage et/ou le transport sécurisés de modules photovoltaïques sans cadre ou autres corps (500) plats parallélépipédiques, comportant
au moins une première, au moins une deuxième, au moins une troisième et au moins une quatrième fixation (400) selon l'une quelconque des revendications 1 à 10,
la deuxième fixation pouvant être disposée par rapport à la première fixation, la troisième fixation pouvant être disposée par rapport à la deuxième fixation et la quatrième fixation pouvant être disposée par rapport à la troisième fixation en étant tournées dans chaque cas sur 90 degrés autour de l'axe (A) de leur droite d'intersection (S), afin de pouvoir recevoir dans la fente (300) de chacune des fixations une partie d'une des quatre zones de coin d'un corps (500) plat parallélépipédique à stocker et/ou à transporter,
et ladite au moins une première, ladite au moins une deuxième, ladite au moins une troisième et ladite au moins une quatrième fixation (400) pouvant être assemblées de manière amovible à d'autres premières, deuxièmes, troisièmes et quatrièmes fixations (400') alignées de manière appropriée, de telle sorte que les droites d'intersection (S, S') de toutes les premières, deuxièmes, troisièmes et quatrièmes fixations se situent chacune dans un axe (A) commun, et de telle sorte que les fixations respectivement assemblées, sous l'effet de la coopération de leurs premiers et deuxièmes éléments de sécurité (170, 180 ; 170', 180'), ne peuvent pas glisser transversalement à l'axe (A) commun et/ou ne peuvent pas glisser le long de l'axe commun.

12. Système d'empilement modulaire selon la revendication précédente,
dans lequel ladite au moins une première fixation avec la face extérieure (116) de sa première paroi latérale (110) et ladite au moins une deuxième fixation avec la face extérieure (126) de sa deuxième paroi latérale (120) peuvent être disposées sur une base horizontale de telle sorte que le corps (500) plat parallélépipédique à stocker et/ou à transporter est orienté parallèlement à la base horizontale avec le côté définissant son épaisseur.
